# EUROPEAN PATENT SPECIFICATION

(11) **EP 2 502 186 B1**
(45) Date of publication and mention of the grant of the patent: **20.11.2013**
(21) Application number: 09808966.7
(22) Date of filing: 20.11.2009
(51) Int. Cl.: G06K 7/10, G06K 17/00

(54) **METHOD AND APPARATUS FOR DETECTING PHYSICAL ASSOCIATIONS BETWEEN ELECTRONIC IDENTIFIERS AND OBJECTS**
VERFAHREN UND VORRICHTUNG ZUR ERKENNUNG VON PHYSIKALISCHEN ZUSAMMENHÄNGEN ZWISCHEN ELEKTRONISCHEN IDENTIFIKATOREN UND OBJEKTEN
PROCÉDÉ ET APPAREIL DE DÉTECTION D'ASSOCIATIONS PHYSIQUES ENTRE DES IDENTIFIANTS ÉLECTRONIQUES ET DES OBJETS

(43) Date of publication of application: 26.09.2012
(73) Proprietor: SELEX ES S.p.A., Roma (IT)
(72) Inventor: BRIANO Andrea, 131 Roma (IT); FERRARIS Bartolomeo, 131 Roma (IT); GUOLO Roberto, 131 Roma (IT)
(74) Representative: Bongiovanni, Simone
(86) International application number: PCT/IT2009/000526
(87) International publication number: WO 2011/061770

(56) References cited:
- US-A1- 2006 238 352

## Description

### TECHNICAL FIELD

The present invention relates to a method and apparatus for detecting physical associations between electronic identifiers and objects. More in particular, the present invention relates to a method and apparatus for detecting physical associations between electronic radiofrequency labels and objects, such as baggage, for example.

### BACKGROUND ART

As known, the so-called Radio Frequency Identification (RFID) technology is currently available, which allows to identify objects by using electronic radiofrequency labels, generally known as RFID tags or transponders.

Each RFID tag, hereinafter named "tag" for simplicity, comprises a support on which there are an integrated circuit, an antenna connected to the integrated circuit, and possibly a battery which is appropriately connected to the integrated circuit. Terminologically, the tags provided with battery are generally known as "active tags", while the tags free from battery are generally known as "passive tags".

More in detail, given a tag, the respective integrated circuit comprises an electronic memory, within which a universal identifier biunivocally associated with the tag is stored, the identifier generally consisting of ninety-six bits, and generally known as ID code. In addition to the ID code, the electronic memory may possibly contain additional information.

From the operative point of view, when tags are close to electronic readers, provided with respective antennas, the ID codes are communicated to the electronic readers, hereinafter named "readers". Moreover, in case of passive tags, they extract the energy required for their operation from the electromagnetic signals emitted by the readers through the respective antennas.

In greater detail, communication between tag and reader may occurs alternatively either by inductive or electromagnetic coupling. In the first case, the tags modulate the load seen from the respective antennas, while in the second case they modulate the impedance of the antennas themselves; in both cases, the modulations occur according to the ID codes so that, by detecting the aforesaid load/impedance modulations, the readers detect the ID codes of the tags.

Even more in detail, upon receiving and decoding a querying signal emitted by at least one reader, each tag replies, i.e. carries out one of the aforesaid load and impendence modulations.

Hereinafter, we will refer to the generation of events for indicating the detection of tag replies by the readers, i.e. the determination of the ID codes by the readers. In other words, an event is generated when a reader, once a querying signal has been emitted, correctly demodulates the ID code associated with a tag which replies to such a querying signal.

Regardless of the implementation details, RFID technology allows to electronically identify objects once the tags have been physically associated (coupled) with the objects and by detecting the tags. For this purpose, the object with which the detected tag is physically associated needs be known. Indeed, if the association between a given tag and the corresponding object may be detected, the identification of the given tag allows to also identify the corresponding object.

In particular, applications are known in which electronic gates are used, i.e. structures through which the objects are forced to pass, each gate being equipped with at least one reader, in order to allow the detection of associations between tags and objects. Because each reader has a respective coverage area, i.e. a volume in which each reader may communicate (detect the replies) with possible tags within the volume itself, but may not communicate with tags arranged outside, the detection of the associations between tags and objects may occur without ambiguities if there is no more than one object/tag in the coverage area.

By way of example, assuming that a single tag coupled to a given object is within the coverage area of a given reader during the time interval T, the given reader generates a first number of querying signals, which cause a second number of replies by the single tag. Therefore, from the point of view of the given reader, during the time interval T, a third number of events occurs, all related to the ID code of the single tag. The first, second and third numbers may be different, because each querying signal is not necessarily received by the single tag with a sufficient power to generate a corresponding reply, and furthermore because one or more replies from the single tag may not be correctly detected by the given reader. Regardless of this, providing that there are at least one event associated with the ID code of the single tag, and the information related to that, during the time interval T, only the given object was present in the coverage area of the given reader, the detection of the physical association between the single tag and the given object occurs without ambiguity. By way of example, the information related to the presence of the given object within the coverage area of the given reader may be obtained by using optical sensors.

At present, RFID technology is widely used in applications where readers may be set up and the movement of the objects may be managed with respect to the readers so that, in a given instant of time, there is no more than one tag in the coverage areas of each reader, so as to allow the physical associations between tags and objects to be simply detected. In particular, the coverage areas of the readers are optimized according to the applications and objects to be monitored.

However, there are applications in which several objects may transit at the same time within the coverage area of a single reader. In these circumstances, events associated with different IDs occur, therefore the electronic detection of the physical associations between objects and tags is difficult, making the use of RFID technology problematic.

US2006/0238352 A1. In particular, document US2006/0238352 A1 discloses a conveyor system which performs the steps of the method according to the preamble of claim 1.

### DISCLOSURE OF INVENTION

It is the object of the present invention to provide a method and apparatus for detecting the physical associations between electronic identifiers and objects, which at least partially solve the drawbacks of the prior art.

According to the invention, a method and apparatus for detecting physical associations between electronic identifiers and objects are provided, as defined in 5 claims 1 and 5, respectively.

### BRIEF DESCRIPTION OF THE DRAWINGS

For a better understanding of the invention, embodiments thereof will be described hereinafter only by way of non-limitative example, and with reference to the accompanying drawings, in which:
- figure 1 diagrammatically shows an embodiment of the present detecting apparatus;
- figure 2 shows a prespective view of a portion of the detecting apparatus shown in figure 1;
- figures 3, 4, 5 show a front view, a side section and a front section of a portion of the detecting apparatus shown in figure 1, respectively;
- figure 6 shows a time axis;
- figures 7, 9, 10 and 16 show flow charts for operations according to the present detecting method;
- figures 11-15 show respective Cartesian planes, each Cartesian plane having a time axis as abscisses, and a strength axis as ordinate; and

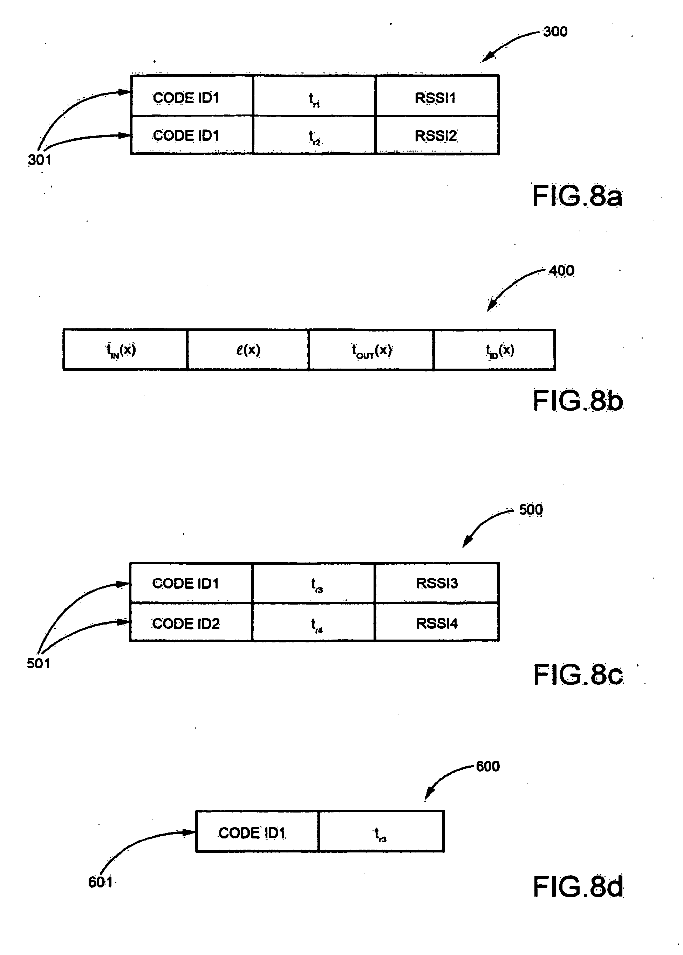

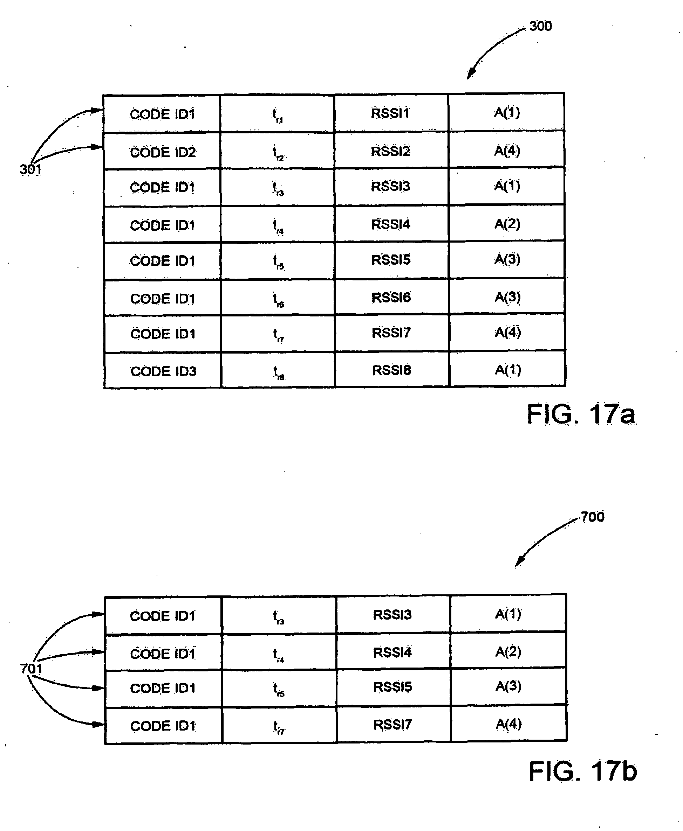

- figures 8a-8d and 17a-17b diagrammatically show examples of data structures according to the present detecting method.

### BEST MODE FOR CARRYING OUT THE INVENTION

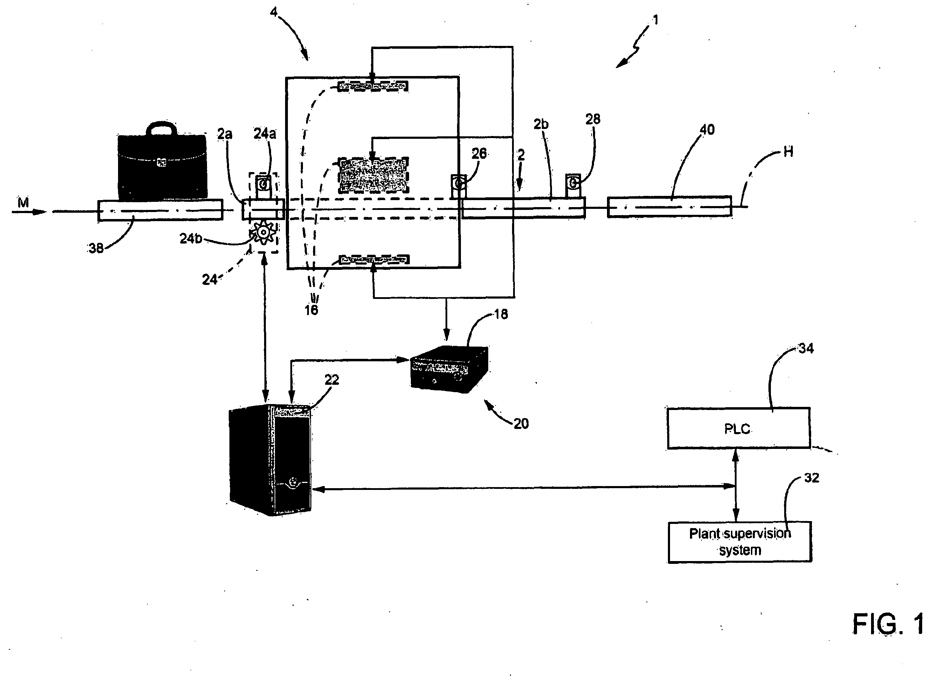

Figure 1 shows an apparatus for detecting physical associations between electronic identifiers and objects, indicated by numeral 1 as a whole, and which hereinafter is named "apparatus 1" for conciseness. Hereinafter, apparatus I is A document which discloses the use of the RFID technology for identifying moving objects is described with reference, by way of mere example, to the case in which the objects are pieces of baggage, although the present apparatus 1 may also be advantageously used in other applications, and thus applied to objects of any type.

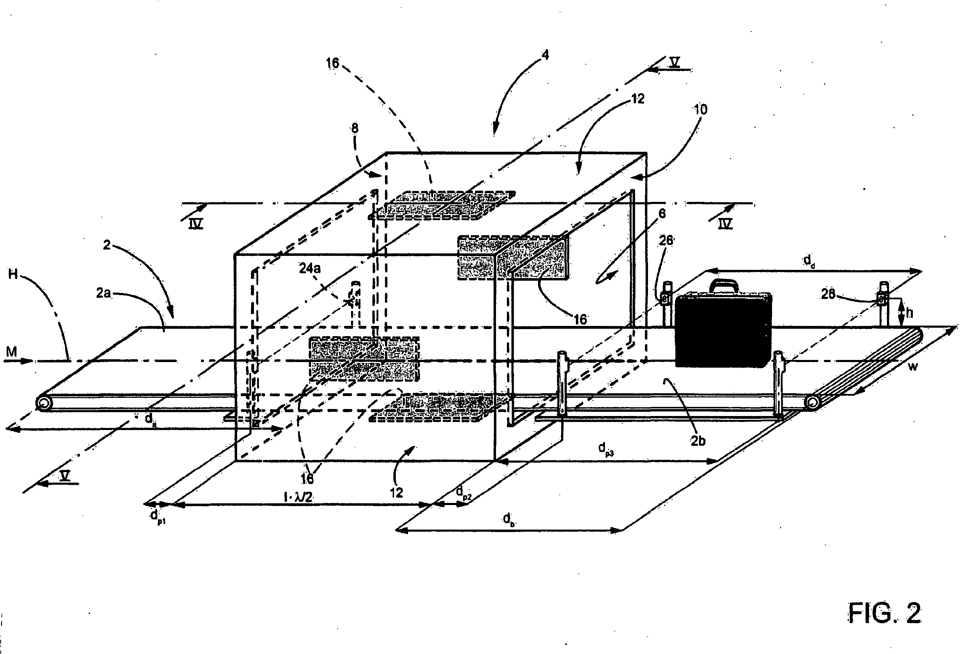

In detail, apparatus 1 comprises a first conveyor belt 2 and a confinement structure 4, which has the shape of a square-based parallelepiped, is made of metal material and defines a cavity 6 (figure 2), within which the first conveyor belt 2 passes, which may work either in continuous or discontinuous (so-called "start & stop") mode.

In particular, the confinement structure 4 has six faces, two of which are partially hollow (not full), hereinafter referred to as the "input wall" and "output wall", by numerals 8 and 10, respectively (figure 2); the remaining four walls will be referred to as "side walls" 12 (figure 2). In particular, the input wall and the output wall 8, 10 are square in shape and are perpendicular to a baggage moving direction M, defined by the first conveyor belt 2, while the side walls 12 are rectangular in shape and parallel to the baggage moving direction M.

By indicating with letter H an axis parallel to the baggage moving direction M, and thus orthogonal to the input and output walls 8, 10, and indicating with λ a design wavelength, described below in detail, the confinement structure 4 has a length of 1*λ/2 along axis H, where 1 is an integer equal to or higher than one.

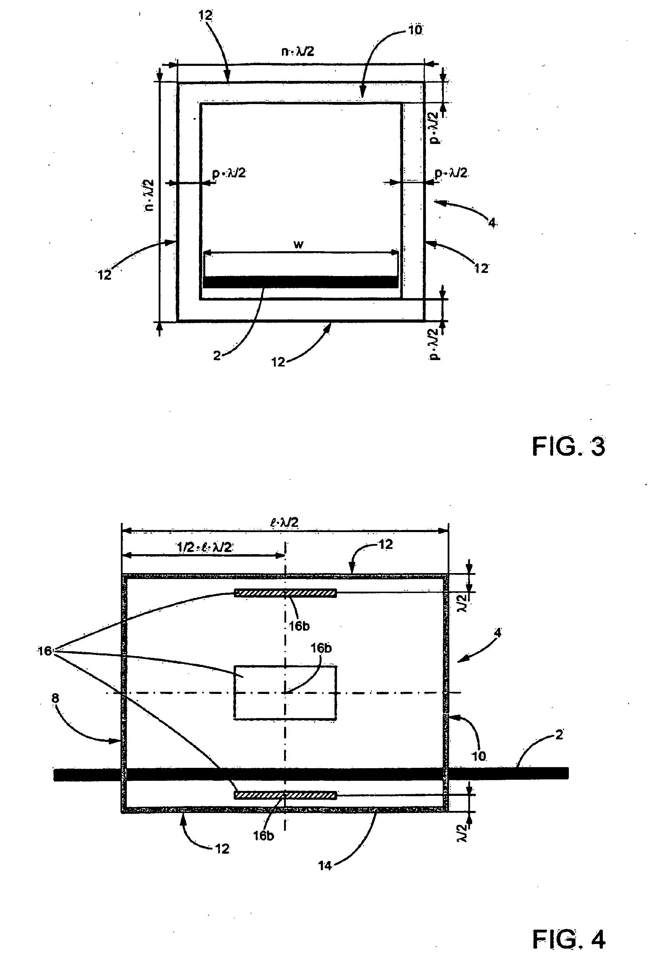

As shown in detail in figure 3, the input and output walls 8, 10 has n*λ/2 long side, such a value representing the width and height of the confinement structure 4; n is also an integer, either higher than or equal to one. Furthermore, the input and output walls 8, 10 have respective hollow portions, which are square-shaped and have the same centre as the corresponding input and output walls 8, 10. In particular, the hollow portions have (n-2p)*λ/2 long sides, where p is an integer between one and n/2-1.

The length of the first conveyor belt 2 is longer than the length of the confinement structure 4, and a width w (figures 2 e 3) is smaller than (n-2p)*λ/2. Furthermore, the first conveyor belt 2 entirely crosses the confinement structure 4, passing through the hollow portions of the input and output walls 8, 10. In particular, with respect to the baggage moving direction M; a first portion 2a of the first conveyor belt 2 extends beyond the confinement structure 4, upstream of the confinement structure 4 itself. Such a first portion 2a has a length dₐ (figure 2). Furthermore, a second portion 2b of the first conveyor belt 2 extends beyond the confinement structure 4, downstream of the confinement structure 4 itself. The length of such a second portion 2b is d_{b} (figure 2).

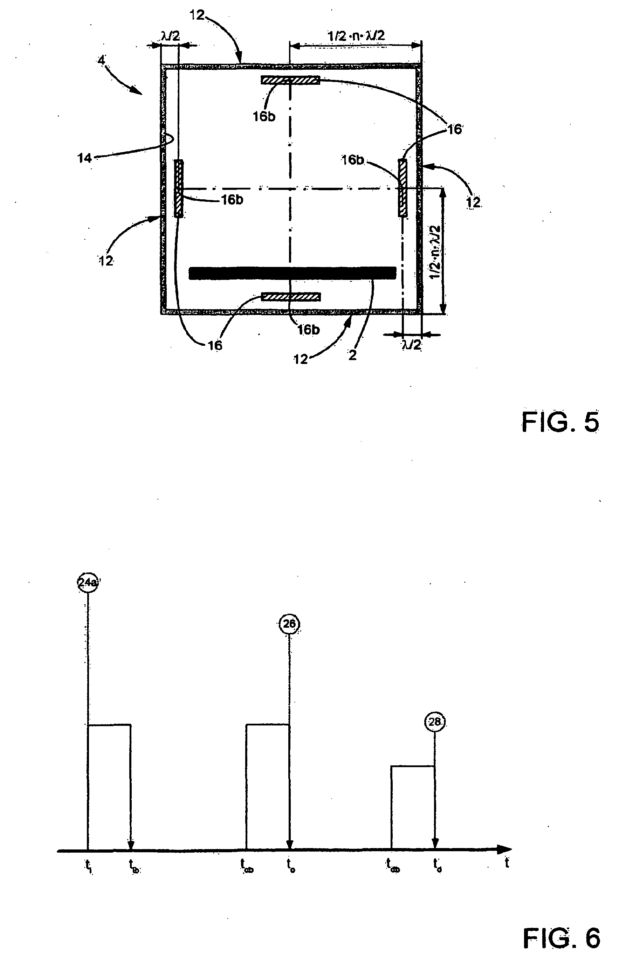

The confinement structure 4 is internally coated with a layer of radio-absorbing (anechoic) material 14 (figures 4, 5). Furthermore, a plurality of antennas 16 are accommodated within cavity 6, which antennas belong to a reader 20 along with a reading unit 18 to which the antennas 16 are connected. By way of example, the described embodiment has four antennas 16.

The antennas 16 are arranged close to the side walls 12 of the confinement structure 4, to which they are connected, e.g. by means of respective dialectic spacers (not shown). In practice, each antenna 16 is close to a corresponding side wall 12, so that the antennas 16 surround the first conveyor belt 2.

The antennas 16 are of the type known per se and may be optimized to operate at the design wavelength λ; for example, the antennas 16 may be patch antennas. Furthermore, as shown in greater detail in figures 4 and 5, defining a respective barycentre 16b for each antenna 16, each barycentre 16b is aligned with the centre of the corresponding side wall 12 and with the centre of the side wall 12 opposing the corresponding side wall 12. Furthermore, each barycentre 16b is λ/2 far from the corresponding side wall 12.

From the operative point of view, the antennas 16 generate respective electromagnetic fields at an operative frequency f, to which the above-mentioned design wavelength λ corresponds, which is obtained by means of the ratio λ=c/f, where c is equal to the light speed in vacuum. Under these conditions, a total electromagnetic field is present within the cavity 6 defined by the confinement structure 4, which is uniform by first approximation. Furthermore, by first approximation, such a total electromagnetic field is confined within the cavity 6 itself, and thus has a reduced amplitude outside the confinement structure 4. This occurs because the size of the confinement structure 4 and the positioning of the antennas 16 are such to minimize not-in-phase reflections of the electromagnetic fields generated by the antennas 16, these reflections being caused by the presence of the antennas 16 and by the inner surfaces of the side walls 12 of the confinement structure 4. With this regard, in order to limit the perturbation of the total electromagnetic field induced by the presence of the first conveyor belt 2, the latter may be made of radio-transparent material, i.e. of a dielectric material which, at the operative frequency f, has a relative dielectric constant εᵣ by first real approximation. The radio-transparent material is thus such not to significantly perturb the total electromagnetic field present inside the cavity 6.

Apparatus I further comprises a computer 22 and a passage detecting sensor 24 formed by a first photocell 24a and a movement encoder 24b. Both the first photocell 24a and the movement encoder 24b 22, as well as the reading unit 18 of the reader 20, are connected to the computer. Furthermore, computer 22 may be connected to an external supervision system 32 and to a Programmable Logic Controller (PLC) 34, which controls the motion of the first conveyor belt 2.

In greater detail, the first photocell 24a is arranged outside the confinement structure 4, and close to the first conveyor belt 2, so as to detect the passage of possible baggage carried by the first conveyor belt 2 before these baggage enter into the confinement structure 4. In other words, the first photocell 24a is arranged upstream of the confinement structure 4, with respect to the baggage moving direction M. The distance (measured along axis H) between the first photocell 24a and the input wall 8 is indicated as distance dₚ₁ (figure 2) and may be zero; distance dₚ₁ may be of 1cm, for example. Furthermore, the first photocell 24a is at a height h

(figure 2) with respect to the first conveyor belt 2 so as to allow, as already mentioned, the detection of baggage. Height h may be of 7cm, for example.

With regard to the movement encoder 24b, it serves the function of generating an electric pulse whenever the first conveyor belt 2 is moved by an elementary movement. For example, the movement encoder 24b may consist of a toothed wheel operatively coupled to the first conveyor belt 2, and an electronic circuitry, in a manner known per se; alternatively, and again by way of example, the movement encoder 24b may be of either optical or magnetic type. Thereby, the movement distance covered by the first conveyor belt 2, i.e. the distance travelled by a hypothetical piece of baggage integrally moving with respect to the first conveyor belt 2 in the considered interval of time, may be determined for each considered interval of time. Such a movement distance is obtained by multiply the elementary movement by the number of pulses generated by the movement encoder 24b during the considered interval of time.

Apparatus 1 further comprises second and third photocells 26, 28, which are connected to the computer 22 (connections are not shown). In particular, the second photocell 26 is arranged outside the confinement structure 4, and close to the first conveyor belt 2, so as to detect the passage of possible baggage carried by the first conveyor belt 2 once these baggage have exited from the confinement structure 4. In other words, with respect to the baggage moving direction M, the second photocell 26 is arranged downstream of the confinement structure 4. Furthermore, the second photocell 26 which may be arranged at the same height h as the first photocell 24a, is generally at a distance dₚ₂ (figure 2) apart from the output wall 10. In practice, as qualitatively shown in figure 1, the second photocell 26 is advantageously arranged at the output wall 10, i.e. with zero distance dₚ₂. With this regard, unless otherwise specified, we will assume distance dₚ₂ to be zero without loosing in generality.

With regard to the third photocell 28, it is arranged downstream of the second photocell 26, from which it is spaced apart by a distance d_{d} (figure 2), measured along the baggage moving direction M (equivalently along axis H); distance d_{d} may be of 110cm, for example. Furthermore, in general, the third photocell 28 is at a distance dₚ₃ (figure 2) from the output wall 10, and may be arranged at the same height h as the first photocell 24a. In practice, assuming dₚ₂=0, we have dₚ₃=d_{d}.

In use, the first conveyor belt 2 may receive the baggage carried by a second conveyor belt 38 outside apparatus 1, having the same baggage moving direction M of the first conveyor belt 2, and arranged upstream of the first conveyor belt 2 with respect to the above-mentioned baggage moving direction M. Similarly, the second conveyor belt 2 may supply the baggage carried by the same to a third conveyor belt 40 outside apparatus 1, having the same baggage moving direction M as the first conveyor belt 2, and arranged downstream of the first conveyor belt 2 with respect to the above-mentioned baggage moving direction M.

In practice, the first, second and third conveyor belts 2, 38, 40 are arranged along a same plane aligned at short distance apart (e.g. less than 5cm) from one another, and with moving directions such that an object carried by the second conveyor belt 38 is then carried by the first conveyor belt 2, and finally by the third conveyor belt 40.

When the first conveyor belt 2 is running, the baggage firstly transit at the first photocell 24a, and then at the second photocell 26, and finally at the third photocell 28.

As shown by way of example in figure 6, and considering the motion of a single piece of baggage carried by the first conveyor belt 2, such a piece of baggage is thus detected by the first photocell 24a at instant tᵢ. In greater detail, at instant tᵢ, the first photocell 24a detects the passage of the baggage point which is further downstream with respect to the baggage moving direction M. Because the baggage has a non-negligible length (measured with respect to the baggage moving direction M), the first photocell 24a then detects the presence of the piece of baggage for the entire duration of an interval of time which starts at instant tᵢ and ends at instant t_{ib}. Such a time instant t_{ib} is the instant when the first photocell 24a detects the passage of the baggage point which is further upstream with respect to the baggage moving direction M. Hereinafter, we will refer to the instants tᵢ and t_{ib} as the instants when the first photocell 24a starts and stops detecting the piece of baggage, respectively.

Similarly, without loosing in generality, assuming that the confinement structure 4 is longer than each piece of baggage, the second photocell 26 starts detecting the piece of baggage at instant t_{ob}, following instant t_{ib}, and stops detecting the piece of baggage at instant to, following instant t_{ob}.

The third photocell 28 then starts detecting the piece of baggage at instant t_{db}, following instant tₒ, and stops detecting the baggage at instant t_{d}, following instant t_{db}.

In practice, the first, second and third photocells 24a, 26, 28 generate first, second and third photocell signals, respectively, indicating the instants tᵢ(x), t_{ib}(x), the instants tₒ(x), t_{ob}(x) and the instants t_{d}(x), t_{db}(x), respectively, associated with the motion of each piece of baggage x carried by the first conveyor belt.

The movement encoder 24 instead generates a movement signal, indicating the movement of the first conveyor belt 2.

Reader 20, by means of the antennas 16, emits querying signals. In particular, hereinafter, we will assume that the reader 20 works in continuous mode, i.e. emits querying signals at a certain periodicity, e.g. of the order of milliseconds.

By equipping the baggage with respective tags, e.g. of passive type, when these tags receive the querying signals emitted by the reader 20, they reply in a manner known per se. Again in a manner known per se, these replies may be detected by the reader 20, which generates a corresponding event at every detection. In particular, each reply may be detected by a respective antenna 16, as the reading movement 18 cooperates with the antennas 16 so as to multiplex the antennas 16 over time.

Each event is thus associated with a corresponding detected ID code, to a corresponding detection instant tᵣ and to a Received Signal Strength Indication (RSSI). Such a RSSI parameter is determined by reader 20 in a manner known per se, and indicates the strength of the tag reply, as detected by the reader 20.

In practice, at each event, the reading unit 18 of reader 20 generates a corresponding event signal, which indicates the corresponding ID code, the corresponding detection jnstant tᵣ and the corresponding RSSI parameter; such an event signal is thus sent to the computer 22.

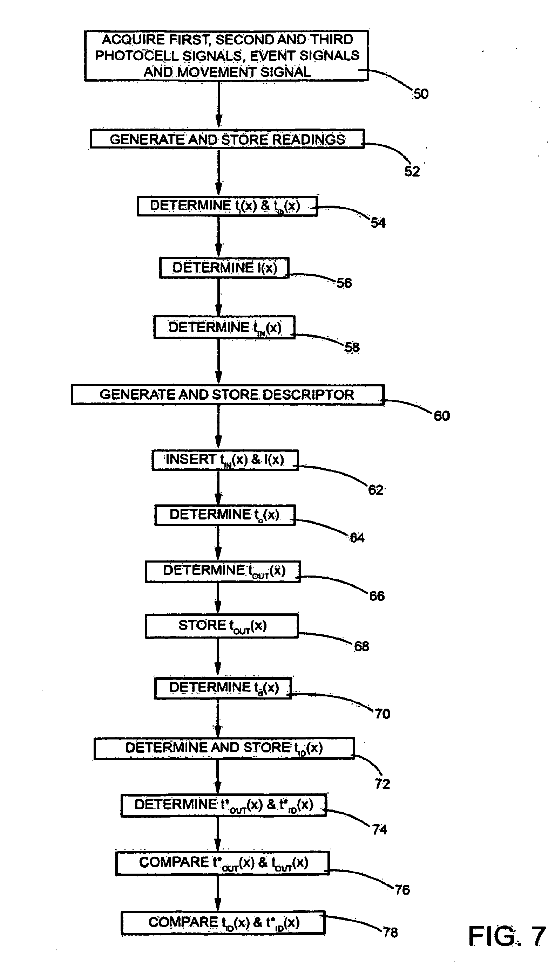

As shown in figure 7, computer 22 acquires (block 50) the first, second and third photocell signals, the event signals and the movement signal. Furthermore, in a manner known per se and thus not shown, computer 22 has its time base and, on the basis of the movement signal, stores the instants when the movement encoder 24b generates the pulses. Thereby, for any considered interval of time, computer 22 is capable of determining the number of pulses generated by the movement encoder 24b during the considered interval of time, and thus the movement distance traveled by the first conveyor belt 2 in such a considered interval of time. It is further worth noting that the reader 20 may also have a respective time base, which may be synchronized with the time base of computer 22.

On the basis of the event signal, computer 22 generates and stores (block 52) corresponding readings 301, each reading 301 being an entry of an event data structure 300, and containing the ID code, the detection instant tᵣ and the RSSI parameter of a corresponding event. An example of a portion of the event data structure 300 is shown in figure 8a; two readings 301, both related to the same code ID1, are shown in such an example. For practical purposes, computer 22 has at least one memory (not shown) in which the event data structure 300 may be stored.

For each piece of baggage x supplied by the second conveyor belt 38 to the first conveyor belt 2, computer 22 determines (block 54) the respective instants tᵢ(x) and t_{ib}(x) on the basis of the first photocell signal. The computer further determines (block 56) the length l(x) of the baggage x on the basis of instants tᵢ(x) and t_{ib}(x) and movement signal.

Computer 22 then determines (block 58) a respective input instant t_{IN}(x) for each piece of baggage x detected by the first photocell 24a. In particular, the input instant t_{IN}(x) is the instant when the point of the piece of baggage x which is further downstream with respect to the baggage moving direction M enters into the confinement structure 4. The input instant t_{IN}(x) is determined in a manner known per se, according to instant tᵢ(x), movement signal and distance dₚ₁.

For example, if distance dₚ₁ is zero, namely if the first photocell 24a is arranged aligned with the input wall 8, the input instant t_{IN}(x) of the piece of baggage x coincides with the instant tᵢ(x). Conversely, if the distance dₚ₁ is higher than zero, the input instant t_{IN}(x) is obtained by adding to the instant tᵢ(x) the time needed for the movement encoder 24b to generate a number of pulses indicating that the first conveyor belt 2 has covered the distance dₚ₁, following the instant tᵢ(x) itself.

Computer 22 then generates and stores (block 60), for each piece of baggage x, a corresponding descriptor, an example of which is shown in figure 8b, such an example being indicated by numeral 400. In practice, for each piece of baggage x, the corresponding descriptor is a corresponding object data structure, in which computer 22 inserts (block 62) the input instant t_{IN}(x) and the length l(x) of baggage x. For practical purposes, each descriptor may be stored in the memory of computer 22.

For each piece of baggage x, computer 22 then determines (block 64) the respective instant tₒ(x), on the basis of the second photocell signal.

Computer 22 thus determines an output instant t_{OUT}(x) (block 66) for each piece of baggage x. In particular, the output instant t_{OUT}(x) is the instant when the point of the piece of baggage x which is further upstream with respect to the baggage moving direction M exits from the confinement structure 4.

The output instant t_{OUT}(x) is determined in a manner known per se, according to instant tₒ(x), movement signal and distance dₚ₂. In particular, without loosing in generality, assuming that distance dₚ₂ is zero, namely that the second photocell 26 is arranged aligned with output wall 10, the output instant t_{OUT}(x) of baggage x coincides with the instant tₒ(x). If distance dₚ₂ is not zero, the output instant t_{OUT}(x) may however be determined according to instant tₒ(x) and movement encoder 24b.

For each baggage x, the output instant t_{OUT}(x) is thus stored (block 68) in the corresponding descriptor. With this regard, it is worth noting that, assuming that the order of the baggage along the first conveyor belt 2 does not vary when crossing the confinement structure 4, the output instant t_{OUT}(x) is stored in the descriptor having the oldest input instant t_{IN}(x) among those being still free from corresponding output instants t_{OUT}(x). Thereby, if a first input instant t_{IN}(x1) of a piece of baggage x1, a second input instant t_{IN}(x2) of a piece of baggage x2, and then the output instant t_{OUT}(x1) of the first piece of baggage occur in sequence, such an output instant t_{OUT}(x1) of the first piece of baggage is correctly associated with the first input instant t_{IN}(x1), hence according to a FIFO (First-In-First-Out) technique.

For each piece of baggage x, computer 22 then determines (block 70) the respective instant t_{d}(x), on the basis of the third photocell signal.

Computer 22 then determines and stores a decision instant t_{ID}(x) for each piece of baggage x (block 72). In particular, the decision instant t_{ID}(x) is the instant when the point of the piece of baggage x which is further upstream with respect to the baggage moving direction M is detected by the third photocell 28. Such a decision instant t_{ID}(x) thus coincides with the instant t_{d}(x), and is stored along with the corresponding input and output instants t_{IN}(x), t_{OUT}(x) in the descriptor of the piece of baggage x, as shown by way of example in figure 8b. In particular, the decision instant t_{ID}(x) is stored in the descriptor the output instant t_{OUT}(x) of which is the oldest among the descriptors being free from decision instant t_{ID}(x), i.e. again according to a FIFO technique.

Computer 22 then determines (block 74) an instant t_{OUT}*(x) and an instant t_{ID}*(x). In particular, the instant t_{OUT}*(x) is equal to the time in which, following instant t_{ib}(x), the movement encoder 24b has generated a number of pulses indicating that the first conveyor belt 2 has moved, with respect to the instant t_{ib}(x), by a length equal to the sum of distance dₚ₁ and the length of the confinement structure 4. Instead, instant t_{ID}*(x) is equal to the instant of time in which, following instant t_{ib}(x), the movement encoder 24b has generated a number of pulses indicating that the first conveyor belt 2 has moved, with respect the instant t_{ib}(x), by a distance equal to the sum of distance dₚ₁ and the length of the confinement structure 4 and distance dₚ₃.

Computer 22 then compares (block 76) an instant t_{OUT}*(x) with an instant t_{OUT}(x). If instants t_{OUT}*(x) and t_{OUT}(x) are the same, regardless of the tolerances caused by the intrinsically discreet operation of the movement encoder 24b, it is inferred that the considered piece of baggage x has integrally moved with the conveyor belt 2, otherwise it is inferred that the baggage x has slipped with respect to the first conveyor belt 2. These information may be supplied to a possible supervisor of the apparatus 1. Furthermore, computer 22 may compare (block 78) the instant t_{ID}*(x) with the instant t_{ID}(x), to obtain further information related to the possible slipping of baggage x.

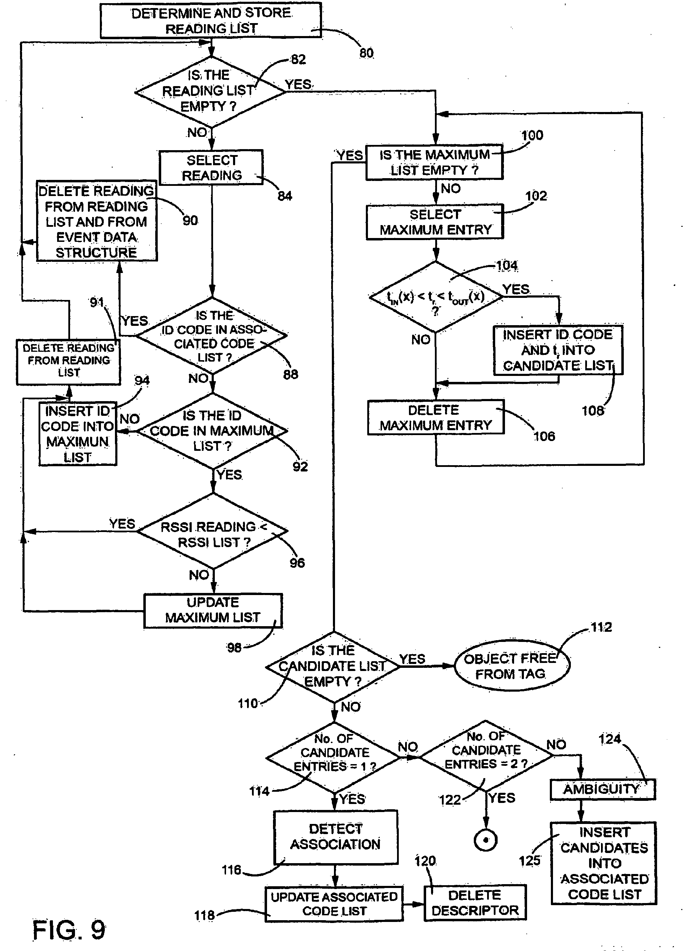

Computer 22 then executes the operations shown in figure 9 and described below, for each piece of baggage x.

In detail, for each piece of baggage x, and following the decision instant t_{ID}(x), computer 22 determines and stores (block 80) a corresponding list of readings consisting of each reading 301 which is present in the event data structure 300, and which:
i) has the detection instant tᵣ<t_{ID}(x);
ii) has the RSSI parameter higher than a minimum threshold RSSImin; and
iii) has the same ID code as at least N other readings 301 of the event data structure 300.

In detail, requirement i) is automatically met if the operations at block 80 are executed exactly at the decision instant t_{ID}(x). Instead, with regard to requirements ii) and iii), they are used to avoid readings linked to spurious events from being processed, such as for example the accidental passage of a tag associated with a person who passes near the confinement structure 4. N may be chosen as desired; e.g. N may be from one to ten.

The readings 301 which do not respect requirements i-iii) may be possibly deleted from the event data structure 300 (step not shown).

Computer 22 then checks (block 82) whether the above-mentioned reading list is empty.

If the reading list is not empty (NO from block 82), computer 22 selects (block 84) a reading from the list of readings, and then checks (block 88) whether the ID code of the selected reading is present in a list of associated codes, described below.

If the ID code of the selected reading is present in the list of associated codes (YES from the block 88), computer 22 deletes (block 90) the selected reading from the list of readings and from the event data structure 300, and then repeats the operations at block 82. Otherwise, if the ID code of the selected reading is not present in the list of associated codes (NO from block 88), computer 22 checks (block 92) whether the ID code of the selected reading is present in a list of maximums 500 (figure 8c). Such a list of maximums 500 is a data structure consisting of a list of maximum entries, each of which is identified by numeral 501 in figure 8c and contains a respective ID code, a respective detection instant tᵣ and a respective RSSI parameter.

If the ID code of the selected reading is not present in the list of maximums 500 (NO from block 92), computer 22 inserts (block 94) the ID code of the selected reading into a corresponding maximum entry, along with the RSSI parameter of the selected reading and at the detection instant tᵣ of the selected reading; computer 22 then deletes (block 91) the selected reading from the list of readings, and then repeats the operations at block 82.

Otherwise, if the code ID of the selected reading is already present in the list of maximums 500 (YES from block 92), computer 22 compares (block 96) the RSSI parameter of the selected reading with the RSSI parameter present in the list of maximums 500 and associated with the ID code of the selected reading, i.e. present in the same maximum entry to which the ID code of the selected reading belongs.

If the RSSI parameter of the selected reading is lower than the RSSI parameter present in the list of maximums 500 and associated with the ID code of the selected reading (YES from block 96), computer 22 repeats the operations at blocks 91 and 82. Otherwise, if the RSSI parameter of the selected reading is higher than the RSSI parameter present in the list of maximums 500 and associated with the ID code of the selected reading (NO from the block 96), computer 22 updates the list of maximums 500 (block 98), and particularly the maximum entry in which the ID code of the selected reading is present, by inserting the RSSI parameter of the selected reading and the detection instant tᵣ of the selected reading into such an entry; computer 22 then repeats the operations at blocks 91 and 82.

In practice, the operations at blocks 82-98 allow to determine a corresponding maximum entry for each ID code present in the reading list. Therefore, although the maximum entries of the list of maximums 500 are similar to the readings of the event data structure 300, unlike the event data structure 300 the list of maximums 500 may not contain more than two maximum entries with the same ID code.

When the reading list is empty (YES from block 82), computer 22 checks

(block 100) whether the list of maximums 500 is empty.

If the list of maximums 500 is not empty (NO from the block 100), computer 22 selects (block 102) a maximum entry.

Computer 22 then checks (block 104) whether the detection instant tᵣ of the selected maximum entry is between the input instant t_{IN}(x) and the output instant t_{OUT}(x) of the piece of baggage x, both contained in the descriptor of baggage x.

If the detection instant tᵣ of the maximum selected entry is not between the input instant t_{IN}(x) and the output instant t_{OUT}(x) of baggage x (YES from block 104), computer 22 deletes the selected maximum entry (block 106), and then repeats the operations at block 100. Conversely, if the detection instant tᵣ of the selected maximum entry is between the input instant t_{IN}(x) and the output instant t_{OUT}(x) of baggage x (YES from block 104), computer 22 inserts (block 108) the ID code and the detection instant tᵣ of the selected maximum entry into a corresponding candidate entry of a list of candidates 600 (figure 8d), and then repeats the operations at blocks 106. An example of list of candidates 600 is shown indeed in figure 8d; in such an example, the list of candidates 600 consists of a single candidate entry, indicated by 601.

Again with reference to the operations at block 100, if the list of maximums 500 is empty (YES from block 100), computer 22 checks (block 110) whether the list of candidates 600 is empty.

If the list of candidates 600 is empty (YES from block 110), the piece of baggage x is free from tag, hence computer 22 may generate a missing tag signal (block 112). Conversely, if the list of candidates 600 is not empty (NO from block 110), computer 22 checks (block 114) whether the number of ID codes contained in the list of candidates 600 is one.

If the number of ID codes contained in the list of candidates 600 is one (YES from block 114), it means that the tag the ID code of which is present in the list of candidates 600 is physically associated with the piece of baggage x, and thus the computer 22 generates (block 116) a signal related to such as an association. Computer 22 then updates (block 118) the list of associated codes, by inserting the ID code present in the list of candidates 600; furthermore, computer 22 deletes (block 120) the descriptor related to the baggage x from the memory.

Alternatively, if the number of ID codes contained in the list of candidates 600 is higher than one (NO from block 114), the computer 22 checks (block 122) whether the number of ID codes contained in the list of candidates 600 is two.

If the number of ID codes contained in the list of candidates 600 is different from two (NO from block 122), it means that either several tags are associated with the piece of baggage x, or that several pieces of baggage are arranged side-by-side transversally with respect to the baggage moving direction M, and thus they are not detected as distinct by the first photocell 24a. Therefore, computer 22 generates (block 124) an ambiguity signal, so as to signal the need to further check the baggage x, e.g. by an operator's inspection; furthermore, computer 22 inserts (block 125) the ID codes contained in the list of candidates 600 into the list of associated codes.

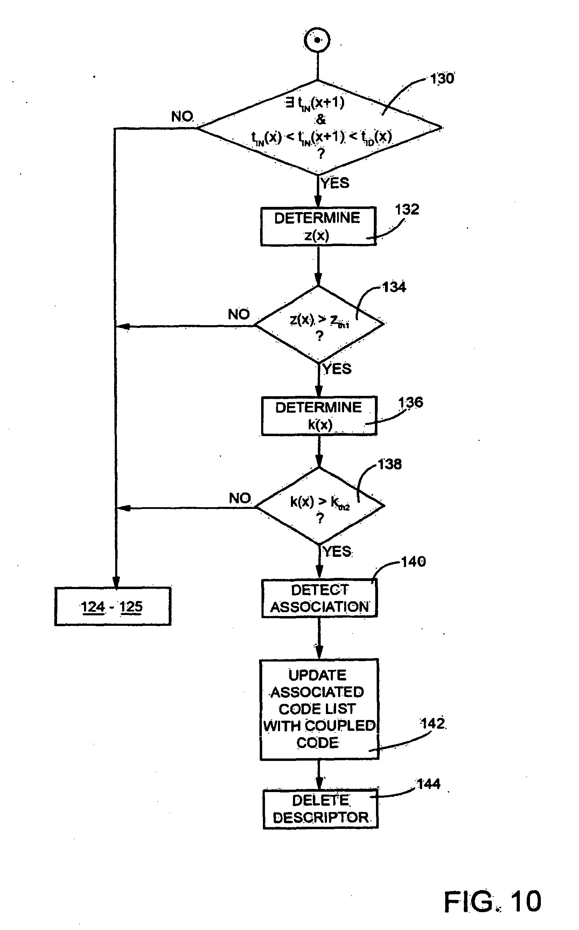

Conversely, if the number of ID codes contained in the list of candidates 600 is two (YES from the block 122), computer 22 executes the operations shown in figure 10.

In particular, on the basis of the first photocell signal and possibly of the movement signal (if distance dₚ₁ is higher than zero), computer 22 checks (block 130) whether an input instant t_{IN}(x+1) is related to a piece of baggage x+1, arranged upstream of the piece of baggage x with respect to the baggage moving direction M, and whether such an input instant t_{IN}(x+1) is between the input and decision instants t_{IN}(x), t_{ID}(x) of the piece of baggage x.

If instant t_{IN}(x+1) does not exist, i.e. if the respective descriptor is missing or if the ratio t_{IN}(x)<t_{IN}(x+1)<t_{ID}(x) does not apply (NO from block 130), computer 22 executes the operations at blocks 124 and 125, and thus generates an ambiguity signal and updates the list of associated codes, because the number of ID codes contained in the list of candidates 600 is two, but there is not piece of baggage x+1 sufficiently close to the piece of baggage x for justifying the presence of two ID codes in the list of candidates 600.

Conversely, if the instant t_{IN}(x+1) exists and the ratio t_{IN}(x)<t_{IN}(x+1)<t_{ID}(x) applies (YES from block 130), computer 22 determines (block 132) a spacing distance z(x) between the point of the piece of baggage x which is further upstream with respect to the baggage moving direction M and the point of the piece of baggage x+1 which is further downstream with respect to the baggage moving direction M. The spacing distance z(x) may be determined according to the first photocell signal and the movement signal, e.g. by counting the number of pulses generated by the position encoder 24b between the instant t_{ib}(x) when the first photocell 24a finishes detecting the piece of baggage x, and the instant tᵢ(x+1) when the first photocell 24a starts detecting the second piece of baggage x+1. The spacing distance z(x) is obtained by multiplying the number of pulses counted by the elementary movement.

Computer 22 then checks (block 134) whether the spacing distance z(x) exceeds a first distance threshold zₜₕ₁, e.g. of 30cm.

If the spacing distance z(x) does not exceed the first distance threshold zₜₕ₁ (NO from block 134), computer 22 executes the operations at blocks 124-125, and thus generates an ambiguity signal and updates the list of associated codes. Indeed, in such a case, the piece of baggage x and the piece of baggage x+1 are so close that a correct detection of the physical associations between tags and baggage x and x+1 may not be detected.

Conversely, if the spacing distance z(x) exceeds the first distance threshold zₜₕ₁ (YES from block 134), computer 22 determines (block 136) a distance k(x). The distance k(x) is obtained by counting the number of pulses generated by the movement encoder 24b between the detection instants tᵣ associated with the two ID codes contained in the list of candidates 600, and multiplying the number of pulses counted for the elementary movement.

Computer 22 then checks (block 138) whether the spacing distance k(x) exceeds a second distance threshold kₜₕ₂, e.g. of 30cm.

If distance k(x) does not exceed the second distance threshold kₜₕ₂ (NO from block 138), computer 22 executes the operations at blocks 124-125, then generates an ambiguity signal and updates the list of associated codes. Indeed, the two ID codes present in the list of candidates 600 are associated with detection instants tᵣ which are so close that they prevent the physical association between tags and baggage x and x+1 from being correctly detected.

Conversely, if the distance k(x) exceeds the second distance threshold kₜₕ₂ (YES from block 134), it means that the piece of baggage x is physically associated with the tag the ID code of which is in the candidate entry which contains the oldest detection instant tᵣ of the two detection instants tᵣ present in the list of candidates 600, hereinafter named "coupled code" for conciseness. Therefore, computer 22 generates (block 140) a signal related to the physical association between the piece of baggage x and the above-mentioned tag. Computer 22 then updates (block 142) the list of associated codes, by inserting the coupled code only; furthermore, computer 22 deletes (block 144) the descriptor related to the baggage x from the memory.

In practice, assuming for simplicity that N=1 and RSSImin=0, and thus that the requirements ii) and iii) are always met, the operations described and shown in figures 7, 9 and 10 provide for determining the list of readings for each piece of baggage x, comparing the detection instants tᵣ of the readings of the event data structure 300 with a first time window Tw1(x), comprised between:
- the detection instant tᵣ of the oldest reading which is present in the event data structure 300 when executing the operations at block 80, i.e. when the list of readings is determined; and
- the decision instant t_{ID}(x) of the piece of baggage x.

Next, the operations described and shown in figures 7, 9 and 10 provide for generating the list of maximums 500 on the basis of the list of readings, and thus determining the list of candidates 600. In particular, the list of candidates 600 is determined according to the list of maximums 500 and a second time window Tw2(x). In practice, in order to determine the list of candidates 600, the detection instants tᵣ of the maximum entries are compared with the second time window Tw2(x), which is comprised between the input instant t_{IN}(x) and the output instant t_{OUT}(x) of the piece of baggage x, thus it has a different time extension as compared to the first time window Tw1(x). The following operations then depend on the number of candidate entries present in the list of candidates 600.

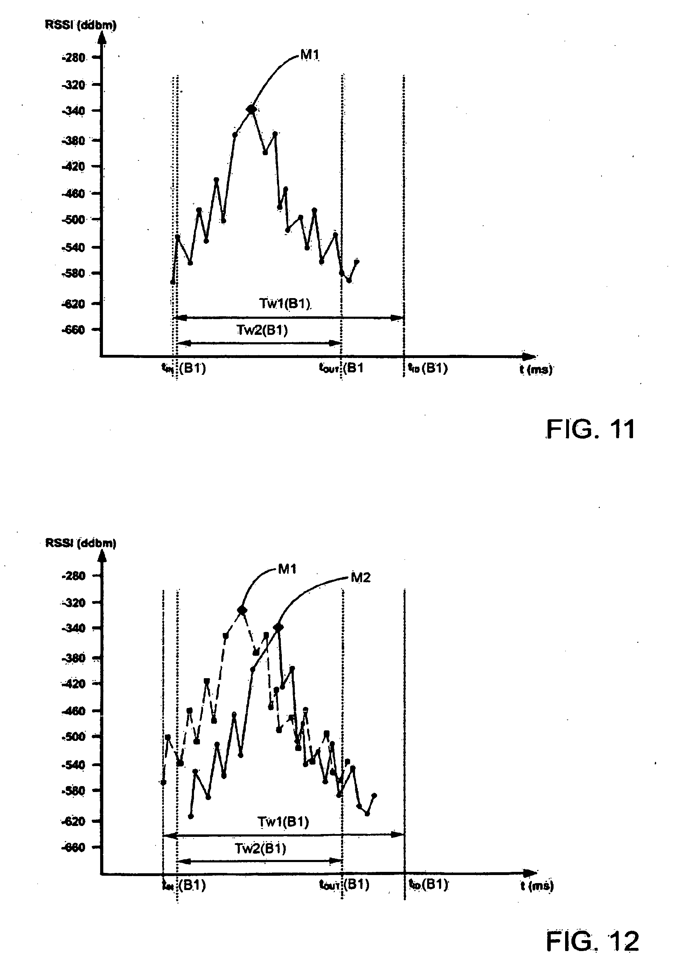

By way of example, figures 11-15 depict possible operative scenarios where the present method may be applied. In particular, these operative scenarios are depicted from a graphic point of view, noting that each reading belonging to any list of readings, and thus each maximum entry, may be shown as a point on a Cartesian plane having a time axis as abscissa, and an RSSI parameter axis as ordinate; therefore, such a point has the detection instant tᵣ of the reading/maximum entry as abscissa, and the RSSI parameter of the reading/maximum entry as ordinate. Furthermore, in order to depict the information associated with the ID code of the reading/maximum entry, different graphic characters are used for the points representing readings/maximum entries with different ID codes. Instead, with regard to the candidate entries, they may be displayed as coinciding with respective maximum entries although the candidate entries do not have per se any information related to the RSSI parameter.

Hereinafter, reference will be made to readings and/or maximum entries inside time windows, for simplicity, for indicating readings and/or maximum entries the detection instants tᵣ of which are within these windows. Furthermore, reference is made to readings related to a certain tag in order to indicate readings with the ID code of the certain tag.

In detail, figure 11 shows an operative scenario where a first tag 11 is associated with a first piece of baggage B1, without further tags being detected during the first time window Tw1(B1) of the piece of baggage B1, i.e. without readings with an ID code different from the ID code of tag I1 and inside the first time window Tw1(B1) of the piece of baggage B1. The application of the present detecting method thus causes the determination of one only first maximum entry and one only first candidate entry, and therefore the correct detection of the coupling between the first tag I1 and the first piece of baggage B1. In particular, the first maximum entry is indicated by point M1.

Figure 12 shows an operative scenario where the first baggage belt B1 is physically associated with a second tag I2 in addition to the first tag I1. In such a case, in connection with the piece of baggage B1, the application of the present detecting method causes the generation of a second maximum entry (indicated by M2), which is within the first time window Tw1(B1) of the piece of baggage B1, and thus results in the generation of a second candidate entry. However, the input of no other baggage is detected between the input and decision instants t_{IN}(x) and t_{ID}(x) of the first piece of baggage B1, and an ambiguity signal is thus generated.

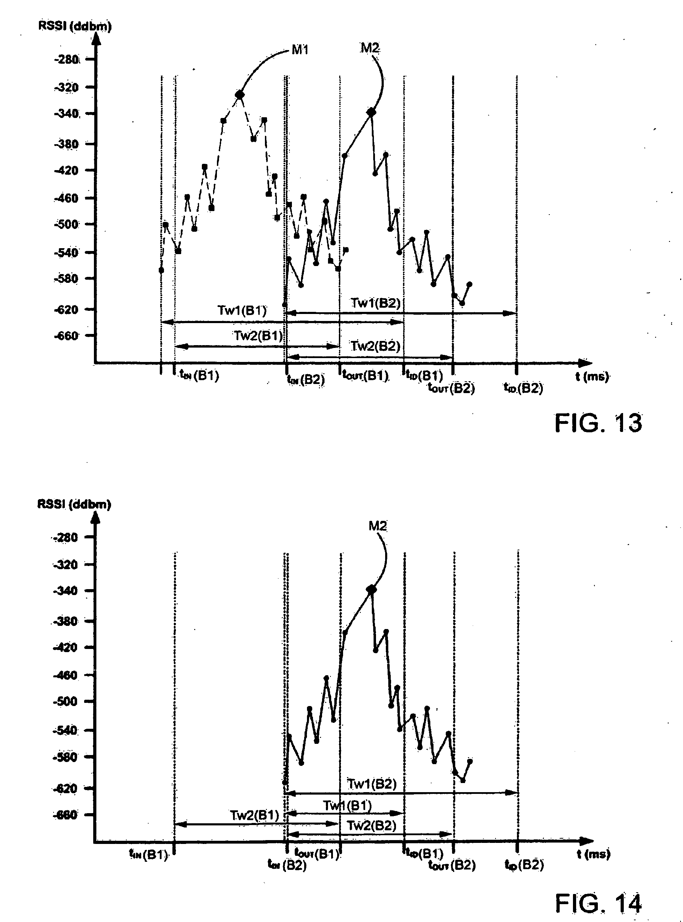

Figure 13 shows instead an operative scenario where the first conveyor belt 2 also carries a second piece of baggage B2, arranged upstream of the first piece of baggage B1 and coupled to the second tag I2. In such a case, in connection with the first piece of baggage B1, the application of the present detecting method causes the generation of the second maximum entry (again indicated by M2), which is however outside the first time window Tw1(B1) of the piece of baggage B1, and hence does not result in the generation of the second candidate entry. Therefore, assuming that the computer 22 is ideal and executes any operation in zero time, the coupling between the first tag I1 and the first piece of baggage B1 is correctly detected at the decision instant t_{ID}(B1) of the first piece of baggage B1. Moreover, at the decision instant t_{ID}(B2) of the second piece of baggage B2, the coupling between the second tag I2 and the second piece of baggage B2 will then be correctly detected. In other words, and again with reference to the first piece of baggage B1, although there are readings related to the second tag I2 within the first time window Tw1(B1) of the first piece of baggage B1, these readings do not prevent the correct detection of the coupling between the first tag I1 and the first piece of baggage B1. Indeed, the second maximum entry M2, which originates from these readings, is outside the second time window Tw2(B1) of the first piece of baggage B1.

Figure 14 shows instead an operative scenario where the first piece of baggage B1 is free from the first tag I1. Furthermore, there are readings related to the second tag 12 within the first time window Tw1(B1) of the first piece of baggage B1. Nevertheless, the second tag I2 is not associated with the first piece of baggage B1. Indeed, the readings related to the second tag I2 result in the generation of the second maximum entry M2 only, which is outside the second time window Tw2(B1) of the first piece of baggage B1.

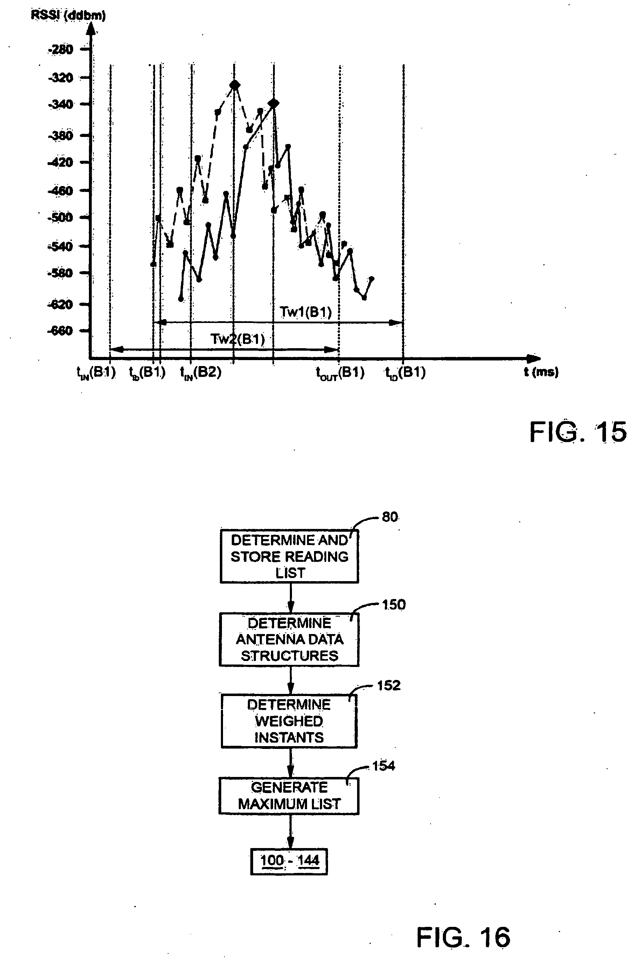

Figure 15 shows instead an operative scenario similar to the operative scenario shown in figure 13. However, unlike that shown in figure 13, in such an operative scenario both the first and the second candidate entries for the first piece of baggage B1 are generated, because both the first and the second maximum entries M1, M2 are inside the first window Tw1(B1) of the first piece of baggage B1. Furthermore, the input instant t_{IN}(B2) of the second piece of baggage B2 is between the input and decision instants t_{IN}(x) and t_{ID}(x) of the first piece of baggage B1. Moreover, the spacing distance z(B1) between the point of the baggage B1 which is further upstream with respect to the baggage moving direction M and the point of the piece of baggage B2 which is further downstream with respect to the baggage moving direction M is assumed to be higher than the first distance threshold zₜₕ₁. Again, the distance k(B1) related to the movement distance traveled between the detection instants tᵣ of the first and second candidate entries is assumed to be higher than the second distance threshold kₜₕ₂. On the basis of these premises, the application of the present method allows to correctly detect the coupling between such a first piece of baggage B1 and the first tag I1 at the decision instant t_{ID}(B1) of the first piece of baggage B1. Similarly, the coupling between the second piece of baggage B2 and the second tag I2will then be detected at the decision instant t_{ID}(B2) of the second piece of baggage B2.

Figure 16 shows the operations of a different embodiment of the present method. Before describing these operations, it is worth specifying that according to such an embodiment, computer 22 cooperates with the reader 20 when generating and storing (block 52) the readings of the event data structure 300, so that each reading 301 also contains an antenna indicator A(i), in addition to the ID code, the detection instant tᵣ and the RSSI parameter of the corresponding event. In particular, the antenna indicator A(i) indicates the antenna 16 through which the reader 20 has received the reply generating the corresponding event. In practice, the operations at block 52 lead to the generation of an event data structure 300 of the type shown by way of example in figure 17a.

Again with reference to figure 16, the list of readings (block 80) is determined as described above, by checking the respect of requirements i), ii) and iii).

For each ID code present in the list of readings, a respective data structure of antennas 700 is then determined (block 150), consisting of a number of respective antenna entries equal to the number of antennas 16. An example of a possible antenna data structure 700 is shown in figure 17b, where the antenna entries are indicated by numeral 701. In this case, the example shown in figure 17b refers to code ID1 and to the event data structure 300 shown by way of example in figure 17a; furthermore, the example shown in figure 17b is obtained by assuming that the list of readings coincides with the event data structure 300 shown in figure 17a, e.g. because tᵣᵢ<t_{ID}(x), N=1 and RSSIi>RSSImin, with i=1,...7.

In particular, considering an ID code among the ID codes present in the list of readings, each antenna entry of the respective antenna data structure 700 contains the considered ID code, the antenna identifier A(i) to which the antenna entry itself refers, and also the detection instant tᵣ and the RSSI parameter of the reading having the maximum RSSI parameter among the readings of the list of readings related to the considered ID code and to such an antenna identifier A(i). In other words, the reading which has the maximum RSSI parameter is extracted from the list of readings for each ID code and for each antenna 16. For example, with reference to figures 17a and 17b, the antenna data structure 700 shown in figure 17b is obtained if RSSI3>RSSI1, RSSI5>RSSI6.

For each ID code present in the list of readings, and thus for each antenna data structure 700, a weighed instant (block 152) is then determined according to the detection instants tᵣ of the antenna data structure 700.

In detail, given an ID code, the weighed instant is obtained as weighed average of the detection instants tᵣ of the corresponding antenna data structure 700. In particular, a respective weight may be assigned to each antenna 16 of the reader 20 in order obtain the weighed average. For example, the weight of each antenna 16 may be directly proportional to the RSSI parameter present in the corresponding antenna entry in the antenna data structure 700 related to the given ID code.

The list of maximums 500 is then generated (block 154), consisting of as many maximum entries as the antenna data structures 700. In particular, each maximum entry contains the ID code of a corresponding antenna data structure 700. Furthermore, in each maximum entry, the respective detection instant tᵣ is set to be equal to the corresponding weighed instant, while the RSSI parameter is set to be equal to the maximum RSSI parameter among the RSSI parameters present in the corresponding antenna data structure 700.

Once the operations at block 154 have been carried out, the detecting method executes the operations 100-144, previously described with regard to figures 9 and 10.

In practice, the operations shown in figure 16 allow to mediate the information obtained from the antennas 16, e.g. by more greatly weighing the information obtained from antennas 16 which have detected events with higher strength, and which probably are under the best conditions for detecting the presence of tags. Furthermore, the determination of the weighed instants allows to have information which is less affected by the positions of the single antennas 16 with respect to the tags.

According to a further embodiment, whenever reference is made, in figures 9, 10 and 16, to instants t_{OUT}(x) and t_{ID}(x), the instants t_{OUT}*(x) and t_{ID}*(x) respectively may be employed, which may be stored in the descriptors of the respective baggage x, as described with regard to the instants t_{OUT}(x) and t_{ID}(x).

In detail, the operations of determining the reading list at block 80 may be executed following the decision instant t_{ID}*(x), and furthermore requirement i) may be formulated as tᵣ<t_{ID}*(x). Similarly, with regard to the operations at block 104, whether the detection instant tᵣ of the selected maximum entry is between the input instant t_{IN}(x) and the instant t_{OUT}*(x) of the piece of baggage x may be checked. Again, with regard to the operations at block 130, whether the possible input instant t_{IN}(x+1) related to a piece of baggage x+1 is between the input and decision instants t_{IN}(x), t_{ID}*(x) of the piece of baggage x may be also checked.

In practice, the use of the instants t_{OUT}*(x) and t_{ID}*(x) makes determining the instants t_{OUT}(x) and t_{ID}(x) optional, and thus makes the presence of the second and third photocells 26, 28 optional. Moreover, if two pieces of baggage are overlaying at the first photocell 24a (and thus only one descriptor is created), but they are not longer overlaying at the third photocell 28 (e.g. because the piece of baggage on top has fallen off), a single decision instant t_{ID}(x) is however determined, thus avoiding the determination of a second decision instant t_{ID}(x+1), which would be free from a corresponding descriptor. Thereby, the possibility of generating incorrect signals is avoided, and a circumstance in which the second decision instant t_{ID}(x+1) is present, but in which a descriptor for its insertion is absent, is prevented.

The advantages allowed by the present detecting method are clearly apparent from the foregoing discussion. In particular, the present detecting method allows to detect the coupling between tags and objects even if these objects are spaced out by small distances, of the order of 30-40cm. Possible ambiguous circumstances are however signaled in order to allow the operators' intervention.

With regard to apparatus 1, instead, it allows to increase the sensitivity to tags present in a certain portion of space, in this case the cavity 6 of the confinement structure 4, in order to avoid incorrect detections of tags which accidentally pass close to the apparatus 1. Furthermore, the apparatus 1 may be easily integrated in baggage moving structures of known type. Similarly, the apparatus 1 may be used along with a barcode reading system of known type, capable of detecting possible barcodes placed on the baggage. Therefore, computer 22 may compare and/or integrate the physical association detections obtained by applying the described detecting method with the results provided by the barcode reading system.

It is finally apparent that changes and variations may be made to the described detecting method and apparatus without departing from the scope of the present invention as defined by the appended claims.

For example, reader 20 may operate in discontinuous mode, being turned on at the input instant t_{IN}(x) of each piece of baggage x, and turned off at the corresponding decision instant t_{ID}(x).

Moreover; for each piece of baggage x, the step of determining the list of readings (block 80) may be delayed to a next instant with respect to the respective decision instant T_{ID}(x) (or to the instant t_{ID}*(x)), in which case the list of readings may consist of readings having detection instants tᵣ<t_{ID}(x)+Δ (or at instant t_{ID}*(x)+Δ), where Δ is a first tolerance, which may be set as desired. Similarly, during the operations of determining the candidate entries and in particular during the operations at block 104, instead of checking whether the detection instant tᵣ of the selected maximum entry is between the input instant t_{IN}(x) and the output instant t_{OUT}(x) of the piece of baggage x (or between the input instant t_{IN}(x) and the instant t_{OUT}*(x)), whether the detection instant tᵣ of the selected maximum entry is between t_{IN}(x)+Δ' and t_{OUT}(x)+Δ (or between t_{IN}(x)+Δ' and t_{OUT}*(x)+Δ") may be checked, where Δ' and Δ" are second and third tolerances, which may be set as desired. It should be further noted that Δ, Δ' and Δ" may be negative.

With regard to the operations shown in figures 7, 9, 10 and 16, the execution order of the operations may be different from that shown and described; similarly, different data structures from those described may be used. Finally, some operations shown in figures 7, 9, 10 and 16 are not executed by the computer 22, but for example by the reading unit 18 of reader 20. Again, a periodical operation of removing, from the event data structure 300, the readings 301 remained in the same event data structure 300 for a time longer than a time threshold may be included.

With regard to apparatus 1, instead, the antennas 16 may be arranged differently from that shown. For example, they may be provided with their shielding, in which case they may be arranged in direct contact with the confinement structure 4.

A different type of sensor may be used instead of the first, second and third photocells 24a, 26, 28; these photocells may be further connected to the reading unit 18 instead of to computer 22. Similarly, any device which allows to determine the movement distances traveled by the first conveyor belt 2 may be used instead of the movement encoder 24b.

Finally, the geometry of the confinement structure may be different from that shown. For example, the input and output walls 8, 10 may be rectangular instead of square in shape.

## Claims

1. A method for detecting physical associations between electronic identifiers and objects to which the electronic identifiers are physically coupled,
each electronic identifier being further associated with a respective code, the method comprising the steps of:
- moving the objects along a moving direction (M), so that they cross a detecting structure (4);
- for each object, determining a respective first instant of time (t_{IN}(x)) and a respective second instant of time (t_{OUT}(x)), respectively indicating the entrance of the object into the detecting structure and the exit of the object from the detecting structure;
- for each object, determining a respective later instant of time (t_{ID}(x)), following the respective second instant of time;
- carrying out detections of the electronic identifiers, each detection being related to a corresponding detected electronic identifier, and being carried out at a respective detection instant (tᵣ); and
- generating event signals indicating corresponding detection instants of corresponding detections, each of said event signals further indicating the code of the corresponding detected electronic identifier;
**characterized in that**:
each of said event signals further indicates a respective detection strength, and further comprising the steps of:
- based on the event signals, generating corresponding first entries (301) of a first data structure (300), each of said first entries comprising the detection instant, the detected electronic identifier code and the detection strength which are indicated by the corresponding event signal;
- for each object, determining a corresponding set of entries, by including in said set of entries those first entries of the first data structure which have detection instants earlier than said later instant of time (t_{ID}(x) related to the object ;
- for each object, generating a number of second entries (501) of a respective second data structure (500) on the basis of said corresponding set of entries, each second entry comprising a respective peak instant and a respective code, said step of generating a number of second entries comprising inserting a new second entry for each code considered among the codes present in said corresponding set of entries related to the object, the inserted new second entry containing the considered code, the peak instant of the inserted new second entry depending on the detection instant of the first entry which:
- belongs to said corresponding set of entries related to the object; and
- has the considered code; and
- has the maximum detection strength among the first entries of said corresponding set of entries related to the object which contain the considered code;
- for each object, generating a number of third entries (601) of a respective third data structure (600), by inserting a new third entry into the third data structure related to the object for every second entry of the second data structure related to the object which has a peak instant within a time window (Tw2(x)) related to the object and extending from the respective first instant of time (t_{IN}(x)) to the respective second instant of time (t_{OUT}(x)), each inserted third entry containing the code of the corresponding second entry and a candidate instant equal to the peak instant of the corresponding second entry;
and wherein the step of detecting physical associations is carried out, for each object, on the basis of the third entries of the third data structure relating to the object

2. The method according to claim 1, wherein said step of determining, for each object, said corresponding set of entries comprises including in said set of entries only those first entries of the first data structure which, besides having detection instants earlier than said later instant of time (t_{ID}(x)) related to the object:
- have a detection strength higher than a strength threshold (RSSImin); and
- the code of which is present in a number of said first entries (301) of said first data structure (300) which is greater than a numeric threshold (N).

3. The method according to claim 1 or 2, further comprising, given a first object, the steps of checking (122) whether the number of third entries (601) present in the third data structure (600) related to the first object is two and, if the number of third entries present in the third data structure related to the first object is two:
- determining (130) a following entrance instant (t_{IN}(x+1)) related to the entrance of a second object in the detecting structure (4);
- checking (130) whether the following entrance instant is between the first instant of time (t_{IN}(x)) and the later instant of time (t_{ID}(x)) related to the first object, and, if the following entrance instant is between the first instant of time and the later instant of time related to the first object:
- determining (132) a spacing distance (z(x)) between the first and second objects;
- checking (134) whether the spacing distance exceeds a first distance threshold (Zₜₕ₁):
- if the spacing distance exceeds the first distance threshold, determining (136) a peak distance (k(x)) based on the candidate instants present in the third entries of the third data structure related to the first object;
- checking (138) if the peak distance exceeds a second distance threshold (kₜₕ₂) and, in case the peak distance exceeds the second distance threshold, associating (140) the object to the electronic identifier having the code which is present in the third entry containing the oldest candidate instant, otherwise generating (124, 125) an ambiguity signal.

4. The method according to claim 3, further comprising the steps of:
- checking (110) whether the number of third entries (601) present in the third data structure (600) related to the first object is zero;
- in case the number of third entries present in the third data structure related to the frst object is zero, generating (112) a missing identifier signal, otherwise checking (114) whether the number of third entries present in the third data structure related to the first object is one; and
- in case the number of third entries present in the third data structure related to the first object is one, generating (116) an association signal.

5. An apparatus for detecting physical associations between electronic identifiers and objects to which the electronic identifiers are physically coupled, each electronic identifier being further associated with a respective code, the apparatus comprising:
- a detecting structure (4);
- moving means (2) configured to move the objects along a moving direction (M), so that they cross the detecting structure;
- first and second sensor means (24a,26,22) configured to determine, for each object, a first instants of time (t_{IN}(x)) and a second instant of time (t_{OUT}(x)), respectively indicating the entrance and the exit of the object to and from the detecting structure;
- third sensor means (28,22) configured to determine, for each object, a respective later instant of time (t_{ID}(x)), following the respective second instant of time; and
- detecting means (16,18,20) configured to carry out detections of the electronic identifiers, each detection being related to a corresponding detected electronic identifier, and being carried out at a respective detection instant (tᵣ), said detecting means being further configured to generate event signals indicating corresponding detection instants of corresponding detections, each of said event signals further indicating the code of the conesponding detected electronic identifier;
**characterized in that**:
each of said event signals further indicates a respective detection strength, and further comprising;
- first processing means (22) configured to generate, based on the event signals, corresponding first entries (301) of a first data structure (300), each first entry comprising the detection instant, the detected electronic identifier code and the detection strength which are indicated by the corresponding event signal;
- second processing means (80) configured to determine, for each object, a corresponding set of entries, by including in said set of entries those first entries of the first data structure which have detection instants earlier than said later instant of time (t_{ID}(x)) related to the object;
- third processing means (22) configured to generate, for each object, a respective number of second entries (501) of a respective second data structure (500) on the basis of said corresponding set of entries, each second entry comprising a respective peak instant and a respective code, said third processing means being further configured to insert a new second entry for each code considered among the codes present in said corresponding set of entries related to the object, the inserted new second entry containing the considered code, the peak instant of the inserted new second entry depending on the detection instant of the first entry which:
- belongs to said corresponding set of entries related to the object; and
- has the considered code; and
- has the maximum detection strength among the first entries of said corresponding set of entries related to the object which contain the considered code;
- fourth processing means (22) configured to generate, for each object, a number of third entries (601) of a respective third data structure (600), by inserting a new third entry into the third data structure related to the object for every second entry of the second data structure related to the object which has a peak instant within a time window (Tw2(x)) related to the object and extending from the respective first instant of time (t_{IN}(x)) to the respective second instant of time (t_{OUT}(x)), each inserted third entry containing the code of the corresponding second entry and a candidate instant equal to the peak instant of the corresponding second entry; and
- means configured to detect physical associations, for each object, on the basis of the third entries of the third data structure relating to the object

6. The apparatus according to claim 5, wherein the detecting structure (4) is made of metal material and defines a cavity (6) within which the moving means (2) extend.

7. The apparatus according to claim 6, wherein the detecting structure (4) is
parallelepiped in shape, having at least partially hollow first and second faces (8,10) opposing each other, through which the moving means (2) extend, the size of said
parallelepiped being a multiple of a wavelength (λ/2).

8. The apparatus according to claim 7, wherein the detecting means (16,18,20) comprise a number of antennas (16), arranged inside the detecting structure (4) and spaced out from the detecting structure (4) by multiple distances of said wavelength (λ/2).

9. The apparatus according to any one of the claims from 5 to 8, wherein said moving means (2) define a moving direction (M) of the objects, and wherein said first and second sensor means (24a,22,26) comprise first and second position detectors (24a,26), respectively, which are arranged upstream and downstream of the detecting structure (4) with respect to the moving direction (M), respectively, said third sensor means (22,28) comprising a third position detector (28) arranged downstream of the second position detector (26) with respect to the moving direction (M).

10. The apparatus according to any one of claims 5-9, further comprising:
- means (122) configured to check, given a first object, whether the number of third entries (601) present in the third data structure (600) related to the first object is two;
- means (130) configured to determine, if the number of third entries present in the third data structure related to the first object is two, a following entrance instant (t_{IN}(x+1)) related to the entrance of a second object in the detecting structure (4);
- means (130) configured to check whether the following entrance instant is between the first instant of time (t_{IN}(x)) and the later instant of time (t_{ID}(x)) related to the first object;
- means (132) configured to determine, if the following entrance instant is between the first instant of time and the later instant of time related to the first object, a spacing distance (z(x)) between the first and second objects;
- means (134) configured to check whether the spacing distance exceeds a fast distance threshold (zₜₕ₁);
- means (136) configured to determine, if the spacing distance exceeds the first distance threshold, a peak distance (k(x)) based on the candidate instants present in the third entries of the third data structure related to the first object;
- means (138) configured to check if the peak distance exceeds a second distance threshold (kₜₕ₂); and
- means (140) configured to associate, in case the peak distance exceeds the second distance threshold, the object to the electronic identifier having the code which is present in the third entry containing the oldest candidate instant, otherwise to generate (124,125) an ambiguity signal.

11. The apparatus according to claim 10, further comprising:
- means (110) configured to check whether the number of third entries (601) present in the third data structure (600) related to the first object is zero;
- means (112) configured to generate, in case the number of third entries present in the third data structure related to the first object is zero, a missing identifier signal;
- means (114) configured to check, in case the number of third entries present in the third data structure related to the first object is different than zero, whether the number of third entries present in the third data structure related to the first object is one; and
- means (116) configured to generate, in case the number of third entries present in the third data structure related to the first object is one, an association signal.

## Patentansprüche

1. Verfahren zum Erfassen von physikalischen Zuordnungen zwischen elektronischen Identifizierern und Objekten, mit denen die elektronischen Idenfizierer physikalisch gekoppelt sind, wobei jedem elektronischen Identifizierer außerdem ein jeweiliger Code zugeordnet ist, wobei das Verfahren die folgenden Schritte aufweist:
Bewegen der Objekte entlang einer Bewegungsrichtung (M), so dass diese eine Erfassungsstruktur (4) kreuzen;
Bestimmen eines jeweiligen ersten Zeitpunktes (t_{IN}(x)) und eines jeweiligen zweiten Zeitpunktes (t_{OUT}(x)), die jeweils den Eintritt des Objektes in die Erfassungsstruktur und den Austritt des Objektes aus der Erfassungsstruktur angeben, für jedes Objekt;
Bestimmen eines jeweiligen späteren Zeitpunktes (t_{ID}(x)), der dem jeweiligen zweiten Zeitpunkt folgt, für jedes Objekt;
Durchführen von Erfassungen der elektronischen Identifizierer, wobei jede Erfassung einen entsprechenden erfassten elektronischen Identifizierer betrifft und zu einem jeweiligen Erfassungszeitpunkt (tᵣ) durchgeführt wird; und
Erzeugen von Ereignissignalen, die entsprechende Erfassungszeitpunkte entspre-chender Erfassungen angeben, wobei jedes der Ereignissignale außerdem den Code des entsprechenden erfassten elektronischen Identifizierers angibt;
**dadurch gekennzeichnet, dass**
jedes der Ereignissignale außerdem eine jeweilige Erfassungsstärke angibt, und wobei das Verfahren außerdem die folgenden Schritte aufweist:
Erzeugen entsprechender erster Einträge (301) einer ersten Datenstruktur (300) auf der Grundlage der Ereignissignale, wobei jeder der ersten Einträge den Erfassungszeitpunkt, den Code des erfassten elektronischen Identifizierers und die Erfassungsstärke, die durch das entsprechende Ereignissignal angegeben werden, aufweist;
Bestimmen eines entsprechenden Eintragsatzes durch Einschließen derjenigen ersten Einträge der ersten Datenstruktur, die frühere Erfassungszeitpunkte als der spätere Zeitpunkt (t_{ID}(x)), der das Objekt betrifft, aufweisen, in den Satz von Einträgen für jedes Objekt;
Erzeugen einer Anzahl zweiter Einträge (501) einer jeweiligen zweiten Datenstruktur (500) auf der Grundlage des entsprechenden Satzes von Einträgen für jedes Objekt, wobei jeder zweite Eintrag einen jeweiligen Spitzenzeitpunkt und einen jeweiligen Code aufweist, wobei der Schritt des Erzeugens einer Anzahl zweiter Einträge ein Einfügen eines neuen zweiten Eintrags für jeden Code, der unter den Codes betrachtet wird, die in dem entsprechenden Satz von Einträgen, die das Objekt betreffen, vorhanden sind, aufweist, wobei der eingefügte neue zweite Eintrag den betrachteten Code enthält, wobei der Spitzenzeitpunkt des eingefügten neuen zweiten Eintrags von dem Erfassungszeitpunkt des ersten Eintrags abhängt, der
zu dem entsprechenden Satz von Einträgen, die das Objekt betreffen, gehört; und
den betrachteten Code aufweist; und
die maximale Erfassungsstärke unter den ersten Einträgen des entsprechenden Satzes von Einträgen, die das Objekt betreffen und den betrachteten Code enthalten, aufweist;
Erzeugen einer Anzahl dritter Einträge (601) einer jeweiligen dritten Datenstruktur (600) für jedes Objekt durch Einfügen eines neuen dritten Eintrags in die dritte Datenstruktur, die das Objekt betrifft, für jeden zweiten Eintrag der zweiten Datenstruktur, die das Objekt betrifft, der einen Spitzenzeitpunkt innerhalb eines Zeitfensters (tw2(x)), das das Objekt betrifft, und sich von dem jeweiligen ersten Zeitpunkt (t_{IN}(x)) bis zu dem jeweiligen zweiten Zeitpunkt (t_{OUT}(x)) erstreckt, aufweist, wobei jeder eingefügte dritte Eintrag den Code des entsprechenden zweiten Eintrags und einen Kandidatenzeitpunkt enthält, der gleich dem Spitzenzeitpunkt des entsprechenden zweiten Eintrags ist;
und wobei der Schritt des Erfassens physikalischer Zuordnungen für jedes Objekt auf der Grundlage der dritten Einträge der dritten Datenstruktur, die das Objekt betrifft, durchgeführt wird.

2. Verfahren nach Anspruch 1, wobei der Schritt des Bestimmens des entsprechenden Satzes von Einträgen für jedes Objekt ein Einschließen derjenigen ersten Einträge der ersten Datenstruktur aufweist, die, neben früheren Erfassungszeitpunkten als der spätere Zeitpunkt (t_{ID}(x)), der das Objekt betrifft,
eine größere Erfassungsstärke als ein Stärkeschwellenwert (RSSIₘᵢₙ) aufweisen;
und
den Code, aufweisen, der in einer Anzahl der ersten Einträge (301) der ersten Datenstruktur (300) vorhanden ist, die größer als ein numerischer Schwellenwert (N) ist.

3. Verfahren nach Anspruch 1 oder 2, das außerdem aufweist:
bei einem gegebenen ersten Objekt die Schritte eines Überprüfens (122), ob die Anzahl dritter Einträge (601), die in der dritten Datenstruktur (600), die das erste Objekt betrifft, vorhanden ist, gleich zwei ist, und, wenn die Anzahl dritter Einträge, die in der dritten Datenstruktur, die das erste Objekt betrifft, vorhanden sind, gleich zwei ist:
Bestimmen (130) eines folgenden Eintrittszeitpunktes ((t_{IN}(x+1)), der den Eintritt eines zweiten Objektes in die Erfassungsstruktur (4) betrifft;
Überprüfen (130), ob der folgende Eintrittszeitpunkt zwischen dem ersten Zeitpunkt (t_{IN}(x)) und dem späteren Zeitpunkt (t_{ID}(x)), der das erste Objekt betrifft, liegt, und wenn der folgende Eintrittszeitpunkt zwischen dem ersten Zeitpunkt und dem späteren Zeitpunkt, der das erste Objekt betrifft, liegt:
Bestimmen (132) eines Abstands (z(x)) zwischen dem ersten und dem zweiten Objekt;
Überprüfen (134), ob der Abstand einen ersten Abstandsschwellenwert (zₜₕ₁) überschreitet;
wenn der Abstand den ersten Abstandsschwellenwert überschreitet, Bestimmen (136) eines Spitzenabstands (k(x)) auf der Grundlage der Kandidatenzeitpunkte, die in den dritten Einträgen der dritten Datenstruktur, die das erste Objekt betrifft, vorhanden sind;
Überprüfen (138), ob der Spitzenabstand einen zweiten Abstandsschwellenwert (kₜₕ₂) überschreitet, und in einem Fall, in dem der Spitzenabstand den zweiten Ab-standsschwellenwert überschreitet, Zuordnen (140) des Objektes zu dem elektronischen Identifizierer, der den Code aufweist, der in dem dritten Eintrag vorhanden ist, der den ältesten Kandidatenzeitpunkt enthält, ansonsten Erzeugen (124, 125) eines Mehrdeutigkeitssignals.

4. Verfahren nach Anspruch 3, das außerdem die folgenden Schritte aufweist:
Überprüfen (110), ob die Anzahl der dritten Einträge (601), die in der dritten Datenstruktur (600), die das erste Objekt betrifft, vorhanden sind, gleich null ist;
in dem Fall, in dem die Anzahl der dritten Einträge, die in der dritten Datenstruktur, die das erste Objekt betrifft, vorhanden sind, gleich null ist, Erzeugen (112) eines Fehlidentifizierersignals, ansonsten Überprüfen (114), ob die Anzahl der dritten Einträge, die in der dritten Datenstruktur, die das erste Objekt betrifft, vorhanden sind, gleich eins ist; und
in dem Fall, in dem die Anzahl der dritten Einträge, die in der dritten Datenstruktur, die das erste Objekt betrifft, vorhanden sind, gleich eins ist, Erzeugen (116) eines Zuordnungssignals.

5. Vorrichtung zum Erfassen von physikalischen Zuordnungen zwischen elektronischen Identifizierern und Objekten, mit denen die elektronischen Identifizierer physikalisch gekoppelt sind, wobei jedem elektronischen Identifizierer außerdem ein jeweiliger Code zugeordnet ist, wobei die Vorrichtung aufweist:
eine Erfassungsstruktur (4);
eine Bewegungseinrichtung (2), die ausgelegt ist, die Objekte entlang einer Bewegungsrichtung (M) zu bewegen, so dass diese die Erfassungsstruktur kreuzen;
eine erste und zweite Sensoreinrichtung (24a, 26, 22), die ausgelegt sind, für jedes Objekt einen ersten Zeitpunkt (t_{IN}(x)) und einen zweiten Zeitpunkt (t_{OUT}(x)) zu bestimmen, die jeweils den Eintritt und den Austritt des Objektes in die und aus der Erfassungsstruktur angeben;
eine dritte Sensoreinrichtung (28, 22), die ausgelegt ist, für jedes Objekt einen jeweiligen späteren Zeitpunkt (t_{ID}(x)), der dem jeweiligen zweiten Zeitpunkt folgt, zu bestimmen; und
eine Erfassungseinrichtung (16, 18, 20), die ausgelegt ist, Erfassungen der elektronischen Identifizierer durchzuführen, wobei jede Erfassung einen entsprechenden erfassten elektronischen Identifizierer betrifft und zu einem jeweiligen Erfassungszeitpunkt (tᵣ) durchgeführt wird, wobei die Erfassungseinrichtung außerdem ausgelegt ist, Ereignissignale zu erzeugen, die entsprechende Erfassungszeitpunkte entsprechender Erfassungen angeben, wobei jedes der Ereignissignale außerdem den Code des entsprechenden erfassten elektronischen Identifizierers angibt;
**dadurch gekennzeichnet, dass**
jedes der Ereignissignale außerdem eine jeweilige Erfassungsstärke angibt, und die Vorrichtung außerdem aufweist:
eine erste Verarbeitungseinrichtung (22), die ausgelegt ist, auf der Grundlage der Ereignissignale entsprechende erste Einträge (301) einer ersten Datenstruktur (300) zu erzeugen, wobei jeder erste Eintrag den Erfassungszeitpunkt, den Code des erfassten elektronischen Identifizierers und die Erfassungsstärke, die durch das entsprechende Ereignissignal angegeben werden, aufweist;
eine zweite Verarbeitungseinrichtung (80), die ausgelegt ist, für jedes Objekt einen entsprechenden Satz von Einträgen durch Einschließen derjenigen ersten Einträge der ersten Datenstruktur, die frühere Erfassungszeitpunkte als der spätere Zeitpunkt (t_{ID}(x)), der das Objekt betrifft, aufweisen, in den Satz von Einträgen zu bestimmen;
eine dritte Verarbeitungseinrichtung (22), die ausgelegt ist, für jedes Objekt eine jeweilige Anzahl von zweiten Einträgen (501) einer jeweiligen zweiten Datenstruktur (500) auf der Grundlage des entsprechenden Satzes von Einträgen zu erzeugen, wobei jeder zweite Eintrag einen jeweiligen Spitzenzeitpunkt und einen jeweiligen Code aufweist, wobei die dritte Verarbeitungseinrichtung außerdem ausgelegt ist, einen neuen zweiten Eintrag für jeden Code, der unter den Codes betrachtet wird, die in dem entsprechenden Satz von Einträgen, die das Objekt betreffen, vorhanden sind, einzufügen, wobei der eingefügte neue zweite Eintrag den betrachteten Code enthält, wobei der Spitzenzeitpunkt des eingefügten neuen zweiten Eintrags von dem Erfassungszeitpunkt des ersten Eintrags abhängt, der
zu dem entsprechenden Satz von Einträgen, die das Objekt betreffen, gehört; und
den betrachteten Code aufweist; und
die maximale Erfassungsstärke unter den ersten Einträgen des entsprechenden Satzes von Einträgen, die das Objekt betreffen, die den betrachteten Code enthalten, aufweist;
eine vierte Verarbeitungseinrichtung (22), die ausgelegt ist, für jedes Objekt eine Anzahl von dritten Einträgen (601) einer jeweiligen dritten Datenstruktur (600) durch Einfügen eines neuen dritten Eintrags in die dritte Datenstruktur, die das Objekt betrifft, für jeden zweiten Eintrag der zweiten Datenstruktur, die das Objekt betrifft, der einen Spitzenzeitpunkt innerhalb eines Zeitfensters (Tw2(x)), das das Objekt betrifft und sich von dem jeweiligen ersten Zeitpunkt (t_{IN}(x)) bis zu dem jeweiligen zweiten Zeitpunkt (t_{OUT}(x)) erstreckt, aufweist, zu erzeugen, wobei jeder eingefügte dritte Eintrag den Code des entsprechenden zweiten Eintrags und einen Kandidatenzeitpunkt enthält, der gleich dem Spitzenzeitpunkt des entsprechenden zweiten Eintrags ist; und
eine Einrichtung, die ausgelegt ist, physikalische Zuordnungen für jedes Objekt auf der Grundlage der dritten Einträge der dritten Datenstruktur, die das Objekt betrifft, zu erfassen.

6. Vorrichtung nach Anspruch 5, wobei die Erfassungsstruktur (4) aus einem Metallmaterial besteht und einen Hohlraum (6) definiert, in dem sich die Bewegungseinrichtung (2) erstreckt.

7. Vorrichtung nach Anspruch 6, wobei die Erfassungsstruktur (4) eine Parallelepiped-Gestalt aufweist, die zumindest teilweise eine hohle erste und zweite Fläche (8, 10), die einander gegenüberliegen, aufweist, durch die sich die Bewegungseinrichtung (2) erstreckt, wobei die Größe des Parallelepipeds gleich einem Mehrfachen einer Wellenlänge (λ/2) ist.

8. Vorrichtung nach Anspruch 7, wobei die Erfassungseinrichtung (16, 18, 20) eine Anzahl von Antennen (16) aufweist, die innerhalb der Erfassungsstruktur (4) angeordnet sind und um mehrfache Abstände der Wellenlänge (λ/2) beabstandet sind.

9. Vorrichtung nach einem der Ansprüche 5 bis 8, wobei die Bewegungseinrichtung (2) eine Bewegungsrichtung (M) der Objekte definiert und wobei die erste und zweite Sensoreinrichtung (24a, 22, 26) einen ersten und zweiten Positionsdetektor (24a, 26) aufweisen, die in Bezug auf die Bewegungsrichtung (M) stromauf und stromab der Erfassungsstruktur (4) angeordnet sind, wobei die dritte Sensoreinrichtung (22, 28) einen dritten Positionsdetektor (28) aufweist, der in Bezug auf die Bewegungsrichtung (M) stromab des zweiten Positionsdetektors (26) angeordnet ist.

10. Vorrichtung nach einem der Ansprüche 5 bis 9, die außerdem aufweist:
eine Einrichtung (122), die ausgelegt ist, bei einem gegebenen ersten Objekt zu überprüfen, ob die Anzahl dritter Einträge (601), die in der dritten Datenstruktur (600), die das erste Objekt betrifft, vorhanden sind, gleich zwei ist;
eine Einrichtung (130), die ausgelegt ist, wenn die Anzahl der dritten Einträge, die in der dritten Datenstruktur, die das erste Objekt betrifft, vorhanden sind, gleich zwei ist, einen folgenden Eintrittszeitpunkt (t_{IN}(x+1)), der den Eintritt eines zweiten Objektes in die Erfassungsstruktur (4) betrifft, zu bestimmen;
eine Einrichtung (130), die ausgelegt ist, zu überprüfen, ob der folgende Eintrittszeitpunkt zwischen dem ersten Zeitpunkt (t_{IN}(x)) und dem späteren Zeitpunkt (t_{ID}(x)), der das erste Objekt betrifft, liegt;
eine Einrichtung (132), die ausgelegt ist, wenn der folgende Eintrittszeitpunkt zwischen dem ersten Zeitpunkt und dem späteren Zeitpunkt, der das erste Objekt betrifft, liegt, einen Abstand (z(x)) zwischen dem ersten und dem zweiten Objekt zu bestimmen;
eine Einrichtung (134), die ausgelegt ist, zu überprüfen, ob der Abstand einen ersten Abstandsschwellenwert (zₜₕ₁) überschreitet;
eine Einrichtung (136), die ausgelegt ist, wenn der Abstand den ersten Abstandsschwellenwert überschreitet, einen Spitzenabstand (k(x)) auf der Grundlage der Kandidatenzeitpunkte, die in den dritten Einträgen der dritten Datenstruktur, die das erste Objekt betrifft, vorhanden sind, zu bestimmen;
eine Einrichtung (138), die ausgelegt ist, zu überprüfen, ob der Spitzenabstand einen zweiten Abstandsschwellenwert (kₜₕ₂) überschreitet; und
eine Einrichtung (140), die ausgelegt ist, in einem Fall, in dem der Spitzenabstand den zweiten Abstandsschwellenwert überschreitet, das Objekt dem elektronischen Identifizierer zuzuordnen, der den Code aufweist, der in dem dritten Eintrag vorhanden ist, der den ältesten Kandidatenzeitpunkt enthält, und ansonsten ein Mehrdeutigkeitssignal zu erzeugen (124, 125).

11. Vorrichtung nach Anspruch 10, die außerdem aufweist:
eine Einrichtung (110), die ausgelegt ist, zu überprüfen, ob die Anzahl dritter Einträge (601), die in der dritten Datenstruktur (600), die das erste Objekt betrifft, vorhanden sind, gleich null ist;
eine Einrichtung (112), die ausgelegt ist, in dem Fall, in dem die Anzahl der dritten Einträge, die in der dritten Datenstruktur, die das erste Objekt betrifft, vorhanden sind, gleich null ist, ein Fehlidentifizierersignal zu erzeugen;
eine Einrichtung (114), die ausgelegt ist, in dem Fall, in dem sich die Anzahl der dritten Einträge, die in der dritten Datenstruktur, die das erste Objekt betrifft, vorhanden sind, von null unterscheidet, zu überprüfen, ob die Anzahl der dritten Einträge, die in der dritten Datenstruktur, die das erste Objekt betrifft, vorhanden sind, gleich eins ist; und
eine Einrichtung (116), die ausgelegt ist, in dem Fall, in dem die Anzahl der dritten Einträge, die in der dritten Datenstruktur, die das erste Objekt betrifft, vorhanden sind, gleich eins ist, ein Zuordnungssignal zu erzeugen.

## Revendications

1. Procédé de détection d'associations physiques entre des identifiants électroniques et des objets auxquels les identifiants électroniques sont couplés physiquement, chaque identifiant électronique étant en outre associé à un code respectif, le procédé comprenant les étapes consistant à :
- déplacer les objets le long d'une direction de déplacement (M), de sorte qu'ils croisent une structure de détection (4) ;
- pour chaque objet, déterminer un premier instant (t_{IN}(x)) respectif et un deuxième instant (t_{OUT}(x)) respectif, indiquant respectivement l'entrée de l'objet dans la structure de détection et la sortie de l'objet de la structure de détection ;
- pour chaque objet, déterminer un instant ultérieur (t_{ID}(x)) respectif, suivant le deuxième instant respectif ;
- réaliser des détections des identifiants électroniques, chaque détection étant relative à un identifiant électronique détecté correspondant, et étant réalisée à un instant de détection (tᵣ) respectif ; et
- générer des signaux d'évènement indiquant des instants de détection correspondants de détections correspondantes, chacun desdits signaux d'évènement indiquant en outre le code de l'identifiant électronique détecté correspondant ;
**caractérisé en ce que** :
chacun desdits signaux d'évènement indique en outre une intensité de détection respective, et comprenant en outre les étapes consistant à :
- sur la base des signaux d'évènement, générer des premières entrées (301) correspondantes d'une première structure de données (300), chacune desdites premières entrées comprenant l'instant de détection, le code d'identifiant électronique détecté et l'intensité de détection qui sont indiqués par le signal d'évènement correspondant ;
- pour chaque objet, déterminer un jeu correspondant d'entrées, en incluant dans ledit jeu d'entrées ces premières entrées de la première structure de données qui ont des instants de détection antérieurs auxdits instants ultérieurs (t_{ID}(x)) relatifs à l'objet ;
- pour chaque objet, générer un nombre de deuxièmes entrées (501) d'une deuxième structure de données (500) respective sur la base dudit jeu correspondant d'entrées, chaque deuxième entrée comprenant un instant crête respectif et un code respectif, ladite étape consistant à générer un nombre de deuxièmes entrées comprenant le fait d'insérer une nouvelle deuxième entrée pour chaque code considéré parmi les codes présents dans ledit jeu correspondant d'entrées relatif à l'objet, la nouvelle deuxième entrée insérée contenant le code considéré, l'instant crête de la nouvelle deuxième entrée insérée, en fonction de l'instant de détection de la première entrée qui :
- appartient audit jeu correspondant d'entrées relatif à l'objet ; et
- a le code considéré ; et
- a l'intensité de détection maximale parmi les premières entrées dudit jeu correspondant d'entrées relatif à l'objet qui contient le code considéré ;
- pour chaque objet, générer un nombre de troisièmes entrées (601) d'une troisième structure de données (600) respective, en insérant une troisième nouvelle entrée dans la troisième structure de données relative à l'objet pour chaque deuxième entrée de la deuxième structure de données relative à l'objet qui a un instant crête dans une fenêtre de temps (Tw2(x)) relative à l'objet et s'étendant du premier instant (t_{IN}(x)) respectif au deuxième instant (t_{OUT}(x)) respectif, chaque troisième instant inséré contenant le code de la deuxième entrée correspondante et un instant candidat égal à l'instant crête de la deuxième entrée correspondante ;
et dans lequel l'étape consistant à détecter des associations physiques est réalisée, pour chaque objet, sur la base des troisièmes entrées de la troisième structure de données relative à l'objet.

2. Procédé selon la revendication 1, dans lequel ladite étape consistant à déterminer, pour chaque objet, ledit jeu correspondant d'entrées comprend le fait d'inclure dans ledit jeu d'entrées uniquement ces premières entrées de la première structure de données qui, en plus d'avoir des instants de détection antérieurs audit instant ultérieur (t_{ID}(x)) relatif à l'objet :
- ont une intensité de détection supérieure à un seuil d'intensité (RSSImin) ; et
- dont le code est présent dans un nombre desdites premières entrées (301) de ladite première structure de données (300) qui est plus grand qu'un seuil numérique (N).

3. Procédé selon la revendication 1 ou 2, comprenant en outre, étant donné un premier objet, les étapes consistant à vérifier (122) si le nombre de troisièmes entrées (601) présentes dans la troisième structure de données (600) relative au premier objet est de deux et, si le nombre de troisièmes entrées présentes dans la troisième structure de données relative au premier objet est de deux :
- déterminer (130) un instant d'entrée suivant (t_{IN}(x+1)) relatif à l'entrée d'un deuxième objet dans la structure de détection (4) ;
- vérifier (130) si l'instant d'entrée suivant est entre le premier instant (t_{IN}(x)) et l'instant ultérieur (t_{ID}(x)) relatif au premier objet, et si l'instant d'entrée suivant est entre le premier instant et l'instant ultérieur relatif au premier objet :
- déterminer (132) une distance de séparation (z(x)) entre les premier et deuxième objets ;
- vérifier (134) si la distance de séparation excède un premier seuil de distance (Zₜₕ₁) ;
- si la distance de séparation excède le premier seuil de distance, déterminer (136) une distance crête (k(x)) sur la base des instants candidats présents dans les troisièmes entrées de la troisième structure de données relative au premier objet ;
- vérifier (138) si la distance crête excède un second seuil de distance (kₜₕ₂) et, dans le cas où la distance crête excède le second seuil de distance, associer (140) l'objet à l'identifiant électronique ayant le code qui est présent dans la troisième entrée contenant l'instant candidat le plus ancien, sinon générer (124, 125) un signal d'ambiguïté.

4. Procédé selon la revendication 3, comprenant en outre les étapes consistant à :
- vérifier (110) si le nombre de troisièmes entrées (601) présentes dans la troisième structure de données (600) relative au premier objet est de zéro ;
- dans le cas où le nombre de troisièmes entrées présentes dans la troisième structure de données relative au premier objet est de zéro, générer (112) un signal d'identifiant manquant, sinon vérifier (114) si le nombre de troisièmes entrées présentes dans la troisième structure de données relative au premier objet est de un ; et
- dans le cas où le nombre de troisièmes entrées présentes dans la troisième structure de données relative au premier objet est de un, générer (116) un signal d'association.

5. Appareil de détection d'associations physiques entre des identifiants électroniques et des objets auxquels les identifiants électroniques sont couplés physiquement, chaque identifiant électronique étant en outre associé à un code respectif, l'appareil comprenant :
- une structure de détection (4) ;
- des moyens de déplacement (2) configurés pour déplacer les objets le long d'une direction de déplacement (M), de sorte qu'ils croisent la structure de détection ;
- des premiers et deuxièmes moyens de capteur (24a, 26, 22) configurés pour déterminer, pour chaque objet, un premier instant (t_{IN}(x)) et un deuxième instant (t_{OUT}(x)), indiquant respectivement l'entrée et la sortie de l'objet dans et de la structure de détection ;
- des troisièmes moyens de capteur (28, 22) configurés pour déterminer, pour chaque objet, un instant ultérieur (t_{ID}(x)) respectif, suivant le deuxième instant respectif ; et
- des moyens de détection (16, 18, 20) configurés pour effectuer des détections des identifiants électroniques, chaque détection étant relative à un identifiant électronique détecté correspondant, et étant réalisée à un instant de détection (tᵣ) respectif, lesdits moyens de détection étant en outre configurés pour générer des signaux d'évènement indiquant des instants de détection correspondants de détections correspondantes, chacun desdits signaux d'évènement indiquant en outre le code de l'identifiant électronique détecté correspondant ; **caractérisé en ce que** :
chacun desdits signaux d'évènement indique en outre une intensité de détection respective, et comprenant en outre :
- des premiers moyens de traitement (22) configurés pour générer, sur la base des signaux d'évènement, des premières entrées correspondantes (301) d'une première structure de données (300), chaque première entrée comprenant l'instant de détection, le code d'identifiant électronique détecté et l'intensité de détection qui sont indiqués par le signal d'évènement correspondant ;
- des deuxièmes moyens de traitement (80) configurés pour déterminer, pour chaque objet, un jeu correspondant d'entrées, en incluant dans ledit jeu d'entrées ces premières entrées de la première structure de données qui ont des instants de détection antérieurs audit instant ultérieur (t_{ID}(x)) relatif à l'objet ;
- des troisièmes moyens de traitement (22) configurés pour générer, pour chaque objet, un nombre respectif de deuxièmes entrées (501) d'une deuxième structure de données (500) respective sur la base dudit jeu correspondant d'entrées, chaque deuxième entrée comprenant un instant crête respectif et un code respectif, lesdits troisièmes moyens de traitement étant en outre configurés pour insérer une nouvelle deuxième entrée pour chaque code considéré parmi les codes présents dans ledit jeu correspondant d'entrées relatif à l'objet, la nouvelle deuxième entrée insérée contenant le code considéré, l'instant crête de la nouvelle deuxième entrée insérée en fonction de l'instant de détection de la première entrée qui :
- appartient audit jeu correspondant d'entrées relatives à l'objet ; et
- a le code considéré ; et
- a l'intensité de détection maximale parmi les premières entrées dudit jeu correspondant d'entrées relatif à l'objet qui contient le code considéré ;
- des quatrièmes moyens de traitement (22) configurés pour générer, pour chaque objet, un nombre de troisièmes entrées (601) d'une troisième structure de données (600) respective, en insérant une nouvelle troisième entrée dans la troisième structure de données relative à l'objet pour chaque deuxième entrée de la deuxième structure de données relative à l'objet qui a un instant crête dans une fenêtre de temps (Tw2(x)) relative à l'objet et s'étendant depuis le premier instant (t_{IN}(x)) respectif au deuxième instant (t_{OUT}(x)) respectif, chaque troisième entrée insérée contenant le code de la deuxième entrée correspondante et un instant candidat égal à l'instant crête de la deuxième entrée correspondante ; et
- des moyens configurés pour détecter des associations physiques, pour chaque objet, sur la base des troisièmes entrées de la troisième structure de données relative à l'objet.

6. Appareil selon la revendication 5, dans lequel la structure de détection (4) est faite d'un matériau métallique et définit une cavité (6) au sein de laquelle les moyens de déplacement (2) s'étendent.

7. Appareil selon la revendication 6, dans lequel la structure de détection (4) est de forme parallélépipédique, ayant au moins des première et deuxième faces partiellement creuses (8, 10) opposées l'une à l'autre, à travers lesquelles les moyens de déplacement (2) s'étendent, la taille dudit parallélépipède étant un multiple d'une longueur d'ondes (λ/2).

8. Appareil selon la revendication 7, dans lequel les moyens de détection (16, 18, 20) comprennent un nombre d'antennes (16), agencées à l'intérieur de la structure de détection (4) et espacées de la structure de détection (4) de distances multiples de ladite longueur d'ondes (λ/2).

9. Appareil selon l'une quelconque des revendications 5 à 8, dans lequel lesdits moyens de déplacement (2) définissent une direction de déplacement (M) des objets, et dans lequel lesdits premiers et deuxièmes moyens de capteur (24a, 22, 26) comprennent des premier et deuxième détecteurs de position (24a, 26), respectivement, qui sont agencés en amont et en aval de la structure de détection (4) par rapport à la direction de déplacement (M), respectivement, lesdits troisièmes moyens de capteur (22, 28) comprenant un troisième détecteur de position (28) agencé en aval du deuxième détecteur de position (26) par rapport à la direction de déplacement (M).

10. Appareil selon l'une quelconque des revendications 5 à 9, comprenant en outre :
- des moyens (122) configurés pour vérifier, étant donné un premier objet, si le nombre de troisièmes entrées (601) présentes dans la troisième structure de données (600) relative au premier objet est de deux ;
- des moyens (130) configurés pour déterminer, si le nombre de troisièmes entrées présentes dans la troisième structure de données relative au premier objet est de deux, un instant d'entrée suivant (t_{IN}(x+1)) relatif à l'entrée d'un deuxième objet dans la structure de détection (4) ;
- des moyens (130) configurés pour vérifier si l'instant d'entrée suivant est entre le premier instant (t_{IN}(x)) et l'instant ultérieur (t_{ID}(x)) relatif au premier objet ;
- des moyens (132) configurés pour déterminer, si l'instant d'entrée suivant est entre le premier instant et l'instant ultérieur relatif au premier objet, une distance de séparation (z(x)) entre les premier et deuxième objets ;
- des moyens (134) configurés pour vérifier si la distance de séparation excède un premier seuil de distance (zₜₕ₁) ;
- des moyens (136) configurés pour déterminer, si la distance de séparation excède le premier seuil de distance, une distance crête (k(x)) sur la base des instants candidats présents dans les troisièmes entrées de la troisième structure de données relatif au premier objet ;
- des moyens (138) configurés pour vérifier si la distance crête excède un second seuil de distance (kₜₕ₂) ; et
- des moyens (140) configurés pour associer, dans le cas où la distance crête excède le second seuil de distance, l'objet à l'identifiant électronique ayant le code qui est présent dans la troisième entrée contenant l'instant candidat le plus ancien, sinon pour générer (124, 125) un signal d'ambiguïté.

11. Appareil selon la revendication 10, comprenant en outre :
- des moyens (110) configurés pour vérifier si le nombre de troisièmes entrées (601) présentes dans la troisième structure de données (600) relative au premier objet est de zéro ;
- des moyens (112) configurés pour générer, dans le cas où le nombre de troisièmes entrées présentes dans la troisième structure de données relative au premier objet est de zéro, un signal d'identifiant manquant ;
- des moyens (114) configurés pour vérifier, dans le cas où le nombre de troisièmes entrées présentes dans la troisième structure de données relative au premier objet est différent de zéro, si le nombre de troisièmes entrées présentes dans la troisième structure de données relative au premier objet est de un ; et
- des moyens (116) configurés pour générer, dans le cas où le nombre de troisièmes entrées présentes dans la troisième structure de données relative au premier objet est de un, un signal d'association.
